# EUROPEAN PATENT APPLICATION

(11) **EP 4 435 047 A1**
(43) Date of publication of application: **25.09.2024**
(21) Application number: 22895589.4
(22) Date of filing: 15.11.2022
(51) Int. Cl.: C08L 23/08, C08F 4/6592, C08G 18/08, C08L 63/00, C08L 75/04, C09D 7/65, C09D 123/08, C09D 201/00

(54) **RESIN COMPOSITION AND USE THEREOF**

(30) Priority: 16.11.2021 JP 2021186432
(71) Applicant: Mitsui Chemicals, Inc., Tokyo 104-0028 (JP)
(72) Inventor: TATEMATSU Ryo, Sodegaura-shi, Chiba 299-0265 (JP); ABE Shota, Tokyo 105-7122 (JP)
(74) Representative: Hoffmann Eitle
(86) International application number: PCT/JP2022/042338
(87) International publication number: WO 2023/090308

(57) **Abstract**

To provide a resin composition excellent in foam suppressing properties as well as foam breaking properties.

A resin composition including a resin (X) excluding the copolymer (Y) described below and an ethylene·α-olefin copolymer (Y) satisfying the following requirements (y-1) and (y-2) :
(y-1) The solubility parameter calculated based on a D. W. Van Krevelen's estimation method is 15.5 to 16.3 (MPa)^{1/2}; and
(y-2) The weight-average molecular weight (Mw) obtained by gel permeation chromatography (GPC) is 1,500 to 30,000.

## Description

### [Technical Field]

The present invention relates to a resin composition and use thereof.

### [Background Art]

Curable urethane resins have been widely used in thermosetting forming, coating materials, ordinary temperature curable forming, injection, coating materials and coat materials. Cured products obtained by curing epoxy resins have also been widely used as electrical and electronic insulating materials, coating materials, adhesives, and materials for casting because of their excellent heat resistance, electrical properties, and mechanical properties, for example. In these applications, generation of various defects such as foam, cissing, and craters may result on a cured surface upon forming and coating with coating materials and impair finishability of cured surfaces, and therefore defoamers are often used as a countermeasure. These defoamers have characteristics of either an effect to improve interfacial activity or an effect to worsen compatibility, i.e., an incompatibility effect, and as defoamers, a silicone-based defoamer such as a dimethylpolysiloxane and a defoamer composed of a modified butadiene polymer, have been conventionally used. Moreover, as a defoamer having a component of a vinyl-based polymer, for example, Patent Literature 1 discloses a defoamer composed of an acrylic/vinyl ether copolymer, and Patent Literature 2 discloses a defoamer composed of a vinyl ether polymer (Patent Literatures 1 and 2).

However, a silicone-based defoamer having a high interfacial activity effect can demonstrate a favorable defoaming effect when added in small quantities, which mainly causes cissing and crater phenomena referred to in the coating material industry, resulting in that an aesthetic appearance of a cured surface may have been significantly impaired. An acrylic/vinyl ether copolymer-based defoamer, a modified butadiene polymer-based defoamer, or a vinyl ether polymer defoamer may not have obtained a sufficient defoaming effect, depending on a viscosity of the system and the presence or absence of solvent.

Patent Literatures 3 to 6, on the other hand, describe that use of ethylene·α-olefin copolymer as a defoamer can provide a resin composition capable of forming a cured product without foaming of a molded body or a coating film upon curing and excellent in surface appearances thereof.

### [Citation List]

### [Patent Literature]

[Patent Literature 1] JP61-141772A
[Patent Literature 2] JPH2(1990)-232271A
[Patent Literature 3] JP2016-41793A
[Patent Literature 4] JP2016-183206A
[Patent Literature 5] JP2018-123187A
[Patent Literature 6] JP2019-143048A

### [Summary of Invention]

### [Technical Problem]

Performance of a defoamer compounded in a resin is generally divided into foam suppressing properties that is suppression of foaming, and foam breaking properties that is elimination of generated foam. Insufficient foam suppressing properties may leave traces of foam that disappeared, which may impair a surface appearance of a resin formed body, while insufficient foam breaking properties may cause the remaining foam to remain, which may impair a surface appearance of the resin formed body.

A resin composition compounded with a defoamer used in a coating method that generates a lot of entrapped foam, such as roller coating and spray coating, is desirably such that it has foam suppressing properties capable of defoaming at an early stage after coating and foam breaking properties enabling continuously defoaming after coating.

However, conventional resin compositions using an ethylene·α-olefin copolymer as defoamers have room for further improvement in terms of foam suppressing properties.

Therefore, an object of the present invention is to provide a resin composition compounded with an ethylene·α-olefin copolymer as a defoamer, which has excellent foam suppressing properties as well as excellent foam breaking properties.

### [Solution to Problem]

The present invention relates to, for example, the following [1] to [18].
[1] A resin composition comprising: a resin (X) excluding the copolymer (Y) described below; and an ethylene·α-olefin copolymer (Y) satisfying the following requirements (y-1) and (y-2) :
   (y-1) A solubility parameter calculated based on a D. W. Van Krevelen's estimation method is 15.5 to 16.3 (MPa)^{1/2}; and
   (y-2) A weight-average molecular weight (Mw) obtained by gel permeation chromatography (GPC) is 1,500 to 30,000.
[2] The resin composition according to [1], wherein the ethylene·α-olefin copolymer (Y) satisfies the following requirement (y-4):
   (y-4) An ethylene content is 1 to 40 mol%.
[3] A resin composition comprising: a resin (X) excluding the copolymer (Y) described below; and an ethylene·α-olefin copolymer (Y) satisfying the following requirements (y-2) and (y-4) :
   (y-2) A weight-average molecular weight (Mw) obtained by gel permeation chromatography (GPC) is 1,500 to 30,000; and
   (y-4) An ethylene content is 1 to 40 mol%.
[4] The resin composition according to [1] or [3], wherein the resin (X) is a curable resin (X1).
[5] The resin composition according to [4], wherein the curable resin (X1) is one or more resins selected from the group consisting of an epoxy resin, a urethane resin, an unsaturated polyester, a phenol resin, a melamine resin, and a silicone resin.
[6] The resin composition according to [5], wherein the curable resin (X1) is one or more resins selected from the group consisting of a urethane resin and an epoxy resin.
[7] The resin composition according to any of [1] to [6], wherein the ethylene·α-olefin copolymer (Y) satisfies the following requirements (y-3) and (y-5):
   (y-3) A kinematic viscosity at 100°C is 10 to 5,000 mm²/s; and
   (y-5) No melting point is observed in a temperature range of -100°C to 150°C in differential scanning calorimetry (DSC).
[8] The resin composition according to any of [1] to [7], wherein the ethylene·α-olefin copolymer (Y) is an ethylene·propylene copolymer.
[9] The resin composition according to any of [1] to [8], wherein a content of the ethylene·α-olefin copolymer (Y) is 0.001 to 20 parts by mass per 100 parts by mass of the resin (X) .
[10] The resin composition according to any of [1] to [9], wherein the ethylene·α-olefin copolymer (Y) is a defoamer.
[11] A molded body formed of the resin composition according to any of [1] to [10].
[12] A coating material comprising the resin composition according to any of [1] to [10].
[13] A waterproof material formed of the resin composition according to any of [1] to [10].
[14] A coating film formed of the resin composition according to any of [1] to [10].
[15] An adhesive formed of the resin composition according to any of [1] to [10].
[16] A method for producing a resin composition, comprising a step of mixing a resin (X) excluding the copolymer (Y') described below and an ethylene·α-olefin copolymer (Y') produced by a method (α) below and satisfying the following requirements (y-1) and (y-2) or the following requirements (y-2) and (y-4):
   (y-1) A solubility parameter calculated based on a D. W. Van Krevelen's estimation method is 15.5 to 16.3 (MPa)^{1/2};
   (y-2) A weight-average molecular weight (Mw) obtained by gel permeation chromatography (GPC) is 1,500 to 30,000; and
   (y-4) An ethylene content is 1 to 40 mol%.
      Method (α): A method including a step of solution polymerizing ethylene and an α-olefin in the presence of a catalyst system containing a bridged metallocene compound (P) represented by the following (formula 1), and at least one compound (Q) selected from the group consisting of an organometallic compound (Q-1), an organoaluminumoxy compound (Q-2), and a compound (Q-3) that reacts with the bridged metallocene compound (P) to form an ion pair. 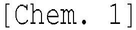 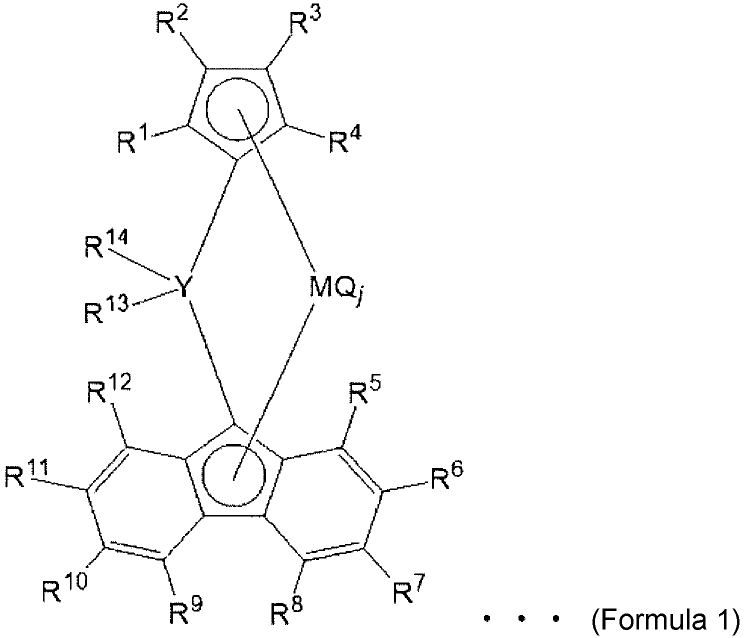 wherein in (formula 1), R¹, R², R³, R⁴, R⁵, R⁸, R⁹ and R¹² are each independently a hydrogen atom, a hydrocarbon group or a silicon-containing hydrocarbon group, and a plurality of adjacent groups are optionally linked to each other to form a ring structure;
      R⁶ and R¹¹ are the same group and are a hydrogen atom, a hydrocarbon group, or a silicon-containing hydrocarbon group;
      R⁷ and R¹⁰ are the same group and are a hydrogen atom, a hydrocarbon group, or a silicon-containing hydrocarbon group;
      R⁶ and R⁷ are optionally bonded to a hydrocarbon having 2 to 3 carbon atoms to form a ring structure;
      R¹⁰ and R¹¹ are optionally bonded to a hydrocarbon having 2 to 3 carbon atoms to form a ring structure, and R⁶, R⁷, R¹⁰ and R¹¹ are not simultaneously hydrogen atoms;
      Y is a carbon atom or a silicon atom;
      R¹³ and R¹⁴ are each independently a hydrogen atom, a hydrocarbon group or a silicon-containing hydrocarbon group, and are optionally linked to each other to form a ring structure;
      M is Ti, Zr or Hf;
      Q is independently a halogen atom, a hydrocarbon group, an anionic ligand or a neutral ligand capable of coordinating to a lone electron pair; and
      j is an integer of 1 to 4.
[17] The production method according to [16], wherein either or both of substituents R¹³ and R¹⁴ of the bridged metallocene compound (P) represented by (formula 1) are aryl groups.
[18] The production method according to [17], wherein both substituents R¹³ and R¹⁴ of the bridged metallocene compound (P) represented by (formula I) are aryl groups, and either of substituents R² and R³ is a saturated hydrocarbon group having 4 carbon atoms.

### [Advantageous Effects of Invention]

The resin composition of the present invention has excellent foam suppressing properties as well as excellent foam breaking properties. Therefore, the resin composition of the present invention can be preferably used in coating applications, particularly as coating material, elastic coat, and waterproof materials, for example.

### [Description of Embodiments]

The present invention will be described in more detail below.

### [Resin composition]

The resin composition according to the present invention contains a resin (X) and an ethylene·α-olefin copolymer (Y).

### (Resin (X))

The resin (X) is a resin excluding the copolymer (Y) described below.

Examples of the resin (X) include a curable resin (X1) and a thermoplastic resin (X2) and preferably the curable resin (X1) from the viewpoint of excellent heat resistance and water resistance.

### Curable resin (X1):

Examples of the curable resin (X1) include one or more resins selected from the group consisting of an epoxy resin, a urethane resin, an unsaturated polyester, a phenol resin, a melamine resin, and a silicone resin. Among them, examples of the curable resin (X1) preferably include one or more resins selected from the group consisting of a urethane resin and an epoxy resin from the viewpoint of excellent adhesiveness to other materials.

### Urethane resin:

The urethane resin exemplified as the curable resin (X1) may be various curable urethane resins, including those conventionally known. In general, a urethane resin is largely divided into one-component curable type, in which an active hydrogen group-containing compound and an excessive organic polyisocyanate react to be cured in the presence of atmospheric moisture, and two-component curable type, which is composed of liquid A, containing an organic polyisocyanate, and liquid B, containing an active hydrogen group-containing compound, wherein the liquid A and the liquid B are subjected to curing by weighing and mixing both at a predetermined ratio immediately before use. In the present invention, the urethane resin may be either a one-component curable type or a two-component curable type, with the two-component curable type being preferred from the viewpoint of facilitating adjustment of curing rate.

Herein, the organic polyisocyanate contained in the liquid A has an average of two or more isocyanate groups in one molecule. Such an organic polyisocyanate is not particularly limited, but includes those used in production of ordinary polyurethane resins, for example,
aromatic diisocyanates such as m-phenylene diisocyanate, p-phenylene diisocyanate, 4,4'-diphenyl diisocyanate, 1,5-naphthalene diisocyanate, 2,4'- or 4,4'-diphenylmethane diisocyanate, 2,4- or 2,6-tolylene diisocyanate, 4,4'-toluidine diisocyanate, and 4,4'-diphenyl ether diisocyanate;
an aromatic ring-containing aliphatic diisocyanate such as 1,3- or 1,4-xylylene diisocyanate;
aliphatic diisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, norbornane diisocyanate, and 2,6-diisocyanate methyl caproate;
alicyclic diisocyanates such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate, 4,4'-methylenebis(cyclohexyl isocyanate), methyl-2,4-cyclohexane diisocyanate, methyl-2,6-cyclohexane diisocyanate, and 1,4-bis(isocyanatomethyl)cyclohexane; and
carbodiimide modified products, biuret modified products, allophanate modified products, dimers or trimers, of these diisocyanates.
These organic polyisocyanates may be used singly or in combinations of two or more thereof.

Among the organic polyisocyanates, the aromatic diisocyanates are preferred, and 2,4-tolylene diisocyanate, 2,6-tolylene diisocyanate, or a mixture thereof, 4,4'-diphenylmethane diisocyanate, carbodiimide-modified 4,4'-diphenylmethane diisocyanate, and polymethylene polyphenyl polyisocyanate are further preferred.

An active hydrogen group-containing compound contained in the liquid B is not particularly limited, and examples thereof include polyamines and polyols. In general, among urethane resins, a curable resin in which a polyamine is mainly used as an active hydrogen group-containing compound, and the active hydrogen group-containing compound and an organic polyisocyanate are bonded mainly by urea bonds, is sometimes called a urea resin, and a curable resin in which a polyol is used as an active hydrogen group-containing compound, and the active hydrogen group-containing compound and an organic polyisocyanate are bonded mainly by urethane bonds, is sometimes called a urethane resin, however, in the present invention, the two are collectively referred to as urethane resins without distinction.

Examples of the polyamine include, for example,
aliphatic polyamines such as ethylenediamine, diethylenetriamine, triethylenetetramine, hexamethylenediamine, and polyoxyalkylene polyamine;
alicyclic polyamines such as isophorone diamine, norbornene diamine, and hydrogenated xylylene diamine;
an aromatic ring-containing aliphatic polyamine such as xylylene diamine; and
aromatic polyamines with an amine value of 180 to 700, such as 3,5-diethyl-2,4-diaminotoluene, 3,5-diethyl-2,6-diaminotoluene, 4,4'-diaminodiphenylmethane, 2,4-tolylene diamine, 2,6-tolylene diamine, 1,1'-dichloro-4,4'-diaminodiphenylmethane, 3,3'-dichloro-4,4'-diaminodiphenylmethane, 1,1',2,2'-tetrachloro-4,4'-diaminodiphenylmethane, 1,3,5-triethyl-2,6-diaminobenzene, 3,3',5,5'-tetraethyl-4,4'-diaminodiphenyl-methane, N,N'-bis(t-butyl)-4,4'-diaminodiphenyl-methane, and di(methylthio)toluenediamine.

Examples of the polyol include, for example,
low molecular weight diols, such as ethylene glycol, propanediol, 1,4-butylene glycol, 1,3-butylene glycol, 1,2-butylene glycol, 1,6-hexanediol, neopentyl glycol, alkanediol (having 7 to 22 carbon atoms), diethylene glycol, triethylene glycol, dipropylene glycol, cyclohexanedimethanol, an alkane-1,2-diol (having 17 to 20 carbon atoms), hydrogenated bisphenol A, 1,4-dihydroxy-2-butene, 2,6-dimethyl-1-octene-3,8-diol, bishydroxyethoxybenzene, xylene glycol, bishydroxyethylene terephthalate, bisphenol A, and bisphenol F;
low molecular weight triols, such as glycerin, 2-methyl-2-hydroxymethyl-1,3-propanediol, 2,4-dihydroxy-3-hydroxymethylpentane, 1,2,6-hexanetriol, 1,1,1-tris(hydroxymethyl)propane, 2,2-bis(hydroxymethyl)-3-butanol, and an aliphatic triol having 8 to 24 carbon atoms;
a low molecular weight polyol having four or more hydroxyl groups in one molecule, such as pentaerythritol;
the corresponding polyhydric alcohol ethers, such as diethylene glycol, dipentaerythritol, and
   ditrimethylolpropane, which are obtained by intermolecular dehydration and condensation of each of the above low molecular weight diols, the above low molecular weight triols, or the low molecular weight polyols having four or more hydroxyl groups in the molecule.
a polytetramethylene glycol obtained by ring-opening polymerization of tetrahydrofuran;
natural fat and oil polyols such as castor oil; and polyolefin polyols such as a polybutadiene polyol and a polyisoprene polyol, and hydrogenated products thereof.

Examples of other polyols that can be used as the active hydrogen group-containing compound include polyoxyalkylene polyols obtained by addition reaction of the above low molecular weight diols, the above low molecular weight triols, diamines, or polyfunctional polyamines such as trifunctional or higher amines, with alkylene oxides such as ethylene oxide and propylene oxide;
polyester polyols obtained by ring-opening polymerization of lactones such as ε-caprolactone and γ-valerolactone by using the above low molecular weight diols and the low molecular weight triols as starting materials;
polycarbonate polyols obtained by ring-opening polymerization of ethylene carbonates by using the above low molecular weight diols and the low molecular weight triols as starting materials; and
polyester polyols obtained by reaction of at least one polyol selected from the group consisting of the low molecular weight diols and the low molecular weight triols, and at least one compound selected from the group consisting of oxalic acid, malonic acid, succinic acid, methylsuccinic acid, glutaric acid, adipic acid, 1,1-dimethyl-1,3-dicarboxypropane, 3-methyl-3-ethylglutaric acid, azelaic acid, sebacic acid, other aliphatic dicarboxylic acids (having 11 to 13 carbon atoms), a HET acid and derivatives thereof. Herein, examples of the derivatives of the carboxylic acids include acid anhydrides such as oxalic anhydride, succinic anhydride, 2-alkyl (having 12 to 18 carbon atoms) succinic anhydride, and acid halides such as oxalic acid dichloride, adipic acid chloride, and sebacic acid chloride.

These active hydrogen group-containing compounds may be used singly or in combinations of two or more. Examples of the active hydrogen group-containing compound preferably include a polyoxyethylene polyol, a polyoxyethylene propylene polyol, a polyoxypropylene polyol, or a bisphenol-based polyol, and a castor oil polyol, which have 2 to 4 active hydrogen groups in one molecule and an average molecular weight of 200 to 6,000.

Among these active hydrogen group-containing compounds, the polyols are preferred from the viewpoint of obtaining a cured product with excellent flexibility. Among them, examples thereof preferably include a combination of two or more compounds selected from polyols having 2 to 4 active hydrogen groups in one molecule.

On the other hand, from the viewpoint of a curing reaction rate in particular at low temperatures and excellent chemical stability of a cured product, the polyamines are preferred. Here, suitable examples of the polyamine include a polyoxyalkylenediamine and a polyoxyalkylenetriamine, having an average molecular weight of 200 to 6,000 with one or more amino groups in one molecule, and specific examples thereof include a diamine with a structure in which a terminal hydroxyl group of a polypropylene glycol chain has been substituted with an amino group, and a triamine with a structure in which a terminal hydroxyl group of the polyol obtained by dehydration and condensation of a trihydric alcohol such as a glycerin with a polypropylene glycol has been substituted with an amino group. Such a polyoxyalkylenediamines or a polyoxyalkylenetriamine can be combined for use with the aforementioned polyamines.

Combinations of the polyols and polyamines are preferred because a cured product having characteristics of both is obtained.

As described above, a two-component curable urethane resin can be suitably employed herein as a urethane resin as the curable resin (X1).

As the liquid A, the excessive organic polyisocyanate can be limitlessly used, however, a prepolymer having at least one free isocyanate group in one molecule, obtained by reaction with the active hydrogen group-containing compound, is preferably used. Specifically, the prepolymer is prepared by reacting an organic polyisocyanate with an active hydrogen group-containing compound at a proportion of the number of hydrogen groups in the active hydrogen group-containing compound of 0.1 to 2.0, relative to one isocyanate group in the organic polyisocyanate, under a nitrogen gas atmosphere at a temperature of 40 to 120°C for 4 to 8 hours under stirring. The urethane prepolymer thus obtained desirably has a content of isocyanate groups of 1 to 20% by weight and preferably 2 to 10% by weight.

The active hydrogen group-containing compound used in the liquid B, which is the aforementioned active hydrogen group-containing compounds, such as the polyamines and the polyols, can be limitlessly used. A prepolymer having at least one active hydrogen group-containing compound in one molecule, obtained by the reaction of the organic polyisocyanate and the excessive active hydrogen group-containing compound, is preferably used.

The liquid A and the liquid B are mixed in a proportion such that the number of active hydrogen groups (hydroxyl groups and/or amino groups) in an active hydrogen group-containing compound is within 0.1 to 2, more preferably 0.5 to 1.5, and further preferably 0.8 to 1.2, relative to one isocyanate group in an organic polyisocyanate.

### Epoxy resin:

The epoxy resin exemplified as the curable resin (X1) is not particularly limited, and as long as the epoxy resin is those in liquid form at ordinary temperature (for example, 25°C), known epoxy resins can be used. Specific examples thereof include glycidyl ether type epoxy resins, such as a bisphenol A type epoxy resin, a bisphenol F type epoxy resin, a phenol novolac type epoxy resin, and a hydrogenated bisphenol A type liquid epoxy resin; glycidyl ester type epoxy resins, such as a hexahydrophthalic acid glycidyl ester and a dimer acid glycidyl ester; glycidylamine type epoxy resins, such as triglycidyl isocyanurate and tetraglycidyl diaminodiphenylmethane; linear aliphatic epoxides, such as an epoxidized polybutadiene and epoxidized soybean oil; and alicyclic epoxides such as 3,4-epoxy-6-methylcyclohexylmethylcarboxylate and 3,4-epoxycyclohexylmethylcarboxylate, which may be used singly or as a mixture of two or more. Among them, the bisphenol type epoxy resin is preferred from the viewpoint of the resulting cured product being excellent in mechanical properties and heat resistance, and of industrially easy availability.

The epoxy resin may be such that a liquid epoxy resin is combined for use with various solid epoxy resins, for example, mixed, and heated to liquefy the combination, as long as the effects of the present invention are not impaired.

In order to reduce a viscosity of the liquid epoxy resin, the epoxy resin may be adjusted to a desired viscosity by adding a low viscosity aliphatic epoxy compound. Such a low viscosity aliphatic epoxy compound is specifically a glycidyl ether of a polyhydric alcohol or a glycidyl ether of a polyether polyol obtained by adding one or more alkylene oxides to a polyhydric alcohol, and examples of the low viscosity aliphatic epoxy compound include, for example,
glycidyl ethers of aliphatic polyhydric alcohols, such as ethylene glycol diglycidyl ether, propylene glycol diglycidyl ether, butanediol diglycidyl ether, neopentyl glycol diglycidyl ether, 1,6-hexanediol diglycidyl ether, glycerin triglycidyl ether, trimethylolpropane triglycidyl ether and a pentaerythritol polyglycidyl ether, and hydrogenated bisphenol A diglycidyl ether; and
glycidyl ethers of aliphatic polyether polyols, such as diethylene glycol diglycidyl ether, a polyethylene glycol diglycidyl ether, a polypropylene glycol diglycidyl ether, and a polyoxyethylene polyoxypropylene glycol diglycidyl ether.
Preferred is a glycidyl ether of a polyhydric alcohol or a glycidyl ether of a polyether polyol, obtained by adding one or more alkylene oxides to a polyhydric alcohol, which has a viscosity of 100 mPa·s or lower at ordinary temperature.

An epoxy compound used herein in order to reduce a viscosity of an epoxy resin is not be limited to the low viscosity aliphatic epoxy compounds, and may also be, for example, an aromatic glycidyl ether having a relatively low viscosity, such as resorcinol diglycidyl ether, or an aromatic glycidyl amine having a relatively low viscosity, such as diglycidyl aniline. These epoxy compounds may be used singly or in admixture of two or more thereof.

### Thermoplastic resin (X2):

Examples of the thermoplastic resin (X2) include:
polyolefins such as a low density polyethylene, a medium density polyethylene, a high density polyethylene, a linear low density polyethylene, a polypropylene, a polybutene, a cyclic olefin polymer, an ethylene-propylene copolymer, and a cyclic olefin copolymer;
styrenic polymers such as a polystyrene, an acrylonitrile-styrene copolymer, an acrylonitrile-butadienestyrene copolymer, a styrene-butadiene copolymer, and a styrene-isoprene copolymer, and hydrogenated products thereof;
a polyvinyl chloride and a polyvinylidene chloride;
vinyl carboxylic acid polymers and vinyl carboxylic acid ester polymers, such as a polyacrylic acid, a polymethacrylic acid, a polymethyl acrylate, a polymethyl methacrylate, and a polyethyl methacrylate;
an ethylene-methacrylic acid copolymer, an ethylene-methacrylic acid ester copolymer, an ethylene-vinyl acetate copolymer, and an ethylene-vinyl alcohol copolymer;
a polycarbonate and a polymethacrylate;
polyesters such as a polyethylene terephthalate and a polybutylene terephthalate;
polyamides such as a nylon 6, nylon 11, nylon 12, nylon 46, nylon 66, nylon MXD6, a fully aromatic polyamide and a semi-aromatic polyamide;
a polyacetal, and
a blend of these resins.

### (Ethylene·α-olefin copolymer (Y))

In one embodiment of the present invention, the ethylene·α-olefin copolymer (Y) is an ethylene·α-olefin copolymer satisfying the requirements (y-1) and (y-2) described below.

The ethylene·α-olefin copolymer (Y) preferably satisfies the requirement (y-4) described below, and also preferably satisfies the requirements (y-3) and (y-5) described below.

In another embodiment of the invention, the ethylene·α-olefin copolymer (Y) is an ethylene·α-olefin copolymer satisfying the requirements (y-2) and (y-4) described below.

The ethylene·α-olefin copolymer (Y) can satisfy the following requirements (y-1) to (y-5).

### Requirement (y-1):

The solubility parameter calculated based on a D.W. Van Krevelen's estimation method is 15.5 to 16.3 (MPa)^{1/2}. In the estimation method, the calculation is carried out on aggregation energy and molar molecular volume (D. W. Van Krevelen, Klaas te Nijenhuis, "Properties of Polymers, Fourth Edition," Elsevier Science, 2009).

The solubility parameter is preferably in a range of 15.8 to 16.3 (MPa)^{1/2} and more preferably 16.0 to 16.3 (MPa)^{1/2}.

The ethylene·α-olefin copolymer with the solubility parameter smaller than the lower limit value described above, particularly 15.5 (MPa)^{1/2}, has low interfacial tension and low compatibility, which may impair the foam breaking properties and facilitate bleeding out of the copolymer on a composition containing the resin (X) and the ethylene·α-olefin copolymer and on a cured product thereof. On the other hand, when the ethylene·α-olefin copolymer with the solubility parameter larger than the above upper limit value, particularly 16.3 (MPa)^{1/2}, has high interfacial tension and high compatibility, which may impair the foam suppressing properties, reduce compatibility with the curable resin (X1), and cause bleed out, and therefore the copolymer may bleed out on a surface of the composition containing the resin (X) and the ethylene·α-olefin copolymer and on a surface of a cured product thereof, thereby impairing their appearances.

The value of the solubility parameter can be adjusted, for example, by changing an ethylene feed rate, hydrogen feed rate, and catalyst feed rate, for example, upon production.

### Requirement (y-2):

The weight-average molecular weight (Mw) obtained by gel permeation chromatography (GPC), as measured under the conditions employed in Examples described below, is 1,500 to 30,000.

The weight-average molecular weight (Mw) is preferably in a range of 1,500 to 13,500, more preferably 1,500 to 11,000, and further preferably 1,500 to 8,500.

The ethylene·α-olefin copolymer with the weight-average molecular weight (Mw) smaller than the above lower limit value, particularly 1,500, has too high compatibility, resulting in that it may not exhibit the defoaming properties, and contains low molecular weight components, thereby facilitating bleeding out of the copolymer on a surface of the composition containing the resin (X) and the ethylene·α-olefin copolymer and on a surface of a cured product thereof. The ethylene·α-olefin copolymer with the weight-average molecular weight larger than the above upper limit value, particularly 30,000, on the other hand, may reduce compatibility with the resin (X) and cause bleeding out of the copolymer on a surface of the composition containing the resin (X) and the ethylene·α-olefin copolymer and on a surface of a cured product thereof.

### Requirement (y-3):

The kinematic viscosity at 100°C as measured in accordance with ASTM D445, is 10 to 5,000 mm²/s.

The kinematic viscosity is preferably 15 to 3,500 mm²/s, more preferably 20 to 2,500 mm²/s, further preferably 20 to 1,000 mm²/s, and still further preferably 20 to 650 mm²/s.

The ethylene·α-olefin copolymer (Y) with the kinematic viscosity being the lower limit value or more, is inhibited from bleeding out on a surface of the composition of the present invention and on a surface of a cured product thereof. The ethylene·α-olefin copolymer (Y) with the kinematic viscosity being the above upper limit value or less, on the other hand, has favorable dispersibility to the resin (X) and is likely to be incorporated in a bubble membrane, thereby demonstrating favorable defoaming properties.

### Requirement (y-4):

A proportion of a constituent unit derived from ethylene (hereinafter also referred to as "ethylene content") is 1 to 40 mol%, provided that the total amount of constituent units in the ethylene·α-olefin copolymer (Y) is 100 mol%.

The ethylene content is preferably in the range of 2 to 39 mol%, more preferably 3 to 38 mol%, and further preferably 4 to 37 mol%.

Within the above range of the ethylene content, a crystal component of the ethylene·α-olefin copolymer (Y) does not impair a surface appearance of a molded body formed of the composition of the present invention, and provides favorable mechanical properties of a coating film formed of the composition of the present invention. The ethylene content being the above upper limit value or less provides excellent foam suppressing properties.

From the viewpoint of a balance between foam breaking properties and foam suppressing properties, the ethylene content is preferably in a range of 5 to 29 mol%, more preferably 6 to 28 mol%, and further preferably 10 to 27 mol%.

### Requirement (y-5):

No melting point is observed in a temperature range of - 100°C to 150°C in differential scanning calorimetry (DSC) under the conditions employed in Examples described below.

The phrase no melting point (Tm) observed means that heat of fusion (ΔH)(unit: J/g) measured by differential scanning calorimetry (DSC) is not substantially measured. The phrase heat of fusion (ΔH) is not substantially measured means that no peaks are observed in measurement with a differential scanning calorimeter (DSC) or the heat of fusion measured is 1 J/g or less.

The melting point (Tm) and heat of fusion ((ΔH) of the ethylene·α-olefin copolymer (Y) are obtained by carrying out differential scanning calorimeter (DSC) measurements under the conditions employed in Examples described below, using the DSC curve obtained when a measurement sample is heated from -100°C to 150°C at a rate of temperature rise of 10°C/min, and analyzing the curve with reference to JIS K7121.

The ethylene·α-olefin copolymer (Y) satisfying the requirement (y-5) can be produced by adjusting, for example, an ethylene feed rate, hydrogen feed rate, and catalyst feed rate, for example.

When the melting point of the ethylene·α-olefin copolymer (Y) is not observed, the ethylene·α-olefin copolymer (Y) has favorable dispersibility in the resin (X) and is likely to be incorporated into a foam membrane, as a result of which the copolymer (Y) demonstrates favorable foam breaking properties.

The ethylene·α-olefin copolymer (Y) satisfying the requirements (y-1) and (y-2) in one embodiment of the present invention preferably satisfies any one of
the requirement (y-3),
the requirement (y-4),
the requirement (y-5),
the requirement (y-3) and the requirement (y-4),
the requirement (y-3) and the requirement (y-5),
the requirement (y-4) and the requirement (y-5), or
the requirement (y-3), the requirement (y-4), and the requirement (y-5).

The ethylene·α-olefin copolymer (Y) satisfying the requirements (y-2) and (y-4) in another embodiment of the present invention preferably satisfies any one of
the requirement (y-1),
the requirement (y-3),
the requirement (y-5) or
the requirement (y-1) and the requirement (y-3),
the requirement (y-1) and the requirement (y-5),
the requirement (y-3) and the requirement (y-5).

Examples of the α-olefin constituting the ethylene·α-olefin copolymer (Y) include α-olefins having 3 to 20 carbon atoms, such as propylene, 1-butene, 1-pentene, 1-hexene, 3-methyl-1-pentene, 4-methyl-1-pentene, 1-octene, 1-nonene, 1-decene, 1-undecene, 1-dodecene, 1-tricene, 1-tridecene, 1-tetradecene, 1-pentadecene, 1-hexadecene, 1-heptadecene, 1-octadecene, 1-nonadecene, and 1-eicosene. These α-olefins can be used singly or in combinations of two or more thereof.

From the viewpoint of effectively reducing crystallinity of the ethylene·α-olefin copolymer (Y) and improving dispersibility in the resin (X), the α-olefin is preferably an α-olefin having 3 to 10 carbon atoms, more preferably propylene, 1-butene, and 1-pentene, and further preferably propylene.

The ethylene·α-olefin copolymer (Y) can be produced by using known methods without limitation. Examples thereof include, for example, a method for copolymerizing ethylene and an α-olefin in the presence of a catalyst composed of a transition metal compound such as vanadium, zirconium, titanium, or hafnium, and an organoaluminum compound (organoaluminumoxy compound) and/or an ionized ionic compound. Metallocene catalysts using transition metal compounds such as zirconium, titanium, and hafnium are preferred because the amount of 2,1-bonds (inversion) of two or more consecutive propylene monomers is little, improving low temperature properties of a curable resin composition. Such a method is described, for example, in WO2000/34420, JP62(1987)-121710A, WO2004/29062, JP2004-175707A, and WO2001/27124, for example.

The ethylene and α-olefin, which are monomers constituting the ethylene·α-olefin copolymer (Y), may be, for example, monomers derived from fossil fuels or monomers derived from biomass, and these monomers may be used singly or in combinations of two or more thereof. In other words, the ethylene·α-olefin copolymer (Y) may be composed solely of a monomer derived from fossil fuels, or composed solely of a monomer derived from biomass, and the monomer derived from fossil fuels and the monomer derived from biomass may be combined for use.

Fossil fuel is petroleum, coal, a natural gas, a shale gas, or combinations thereof. Biomass is any renewable natural raw material and its residues, such as those derived from plants or animals, including fungi, yeast, algae and bacteria.

The ethylene·α-olefin copolymer (Y) can be produced by copolymerizing ethylene and an α-olefin having 3 to 20 carbon atoms in the presence of an olefin polymerization catalyst containing a bridged metallocene compound (P) represented by the following formula [I], and at least one compound (Q) selected from the group consisting of an organometallic compound (Q-1), an organoaluminumoxy compound (Q-2), and a compound (Q-3) that reacts with the bridged metallocene compound (P) to form an ion pair.

### [Bridged metallocene compound (P)]

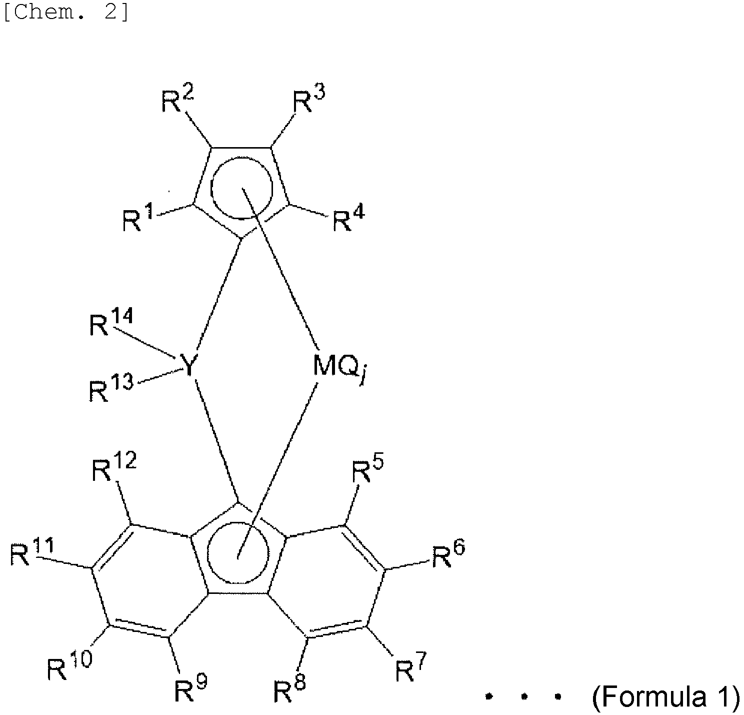

wherein Y, M, R¹ to R¹⁴, Q, n and j in (formula 1) will be described below.

### <<Y>>

Y is a carbon atom or a silicon atom and preferably a carbon atom.

### <<M>>

M is a titanium atom, a zirconium atom or a hafnium atom, preferably a zirconium atom.

### <<R¹ to R¹⁴>>

R¹, R², R³, R⁴, R⁵, R⁸, R⁹ and R¹² are each independently an atom or a substituent selected from the group consisting of a hydrogen atom, a hydrocarbon group and a silicon-containing hydrocarbon group, and a plurality of adjacent groups are optionally linked to each other to form a ring structure.

Examples of the hydrocarbon group include an alkyl group having 1 to 20 carbons, a cyclic saturated hydrocarbon group having 3 to 20 carbon atoms, a chain unsaturated hydrocarbon group having 2 to 20 carbon atoms, a cyclic unsaturated hydrocarbon group having 3 to 20 carbon atoms, an alkylene group having 1 to 20 carbon atoms, and an arylene group having 6 to 20 carbon atoms, for example.

Examples of the alkyl groups having 1 to 20 carbon atoms include, for example, linear saturated hydrocarbon groups such as a methyl group, an ethyl group, a n-propyl group, an allyl group, a n-butyl group, a n-pentyl group, a n-hexyl group, a n-heptyl group, a n-octyl group, a n-nonyl group and a n-decanyl group, and branched saturated hydrocarbon groups such as an isopropyl group, an isobutyl group, a s-butyl group, a t-butyl group, a t-amyl group, a neopentyl group, a 3-methylpentyl group, a 1,1-diethylpropyl group, a 1,1-dimethylbutyl group, a 1-methyl-1-propylbutyl group, a 1,1-propylbutyl group, a 1,1-dimethyl-2-methylpropyl group, a 1-methyl-1-isopropyl-2-methylpropyl group and a cyclopropylmethyl group. The alkyl group preferably has 1 to 6 carbon atoms.

Examples of the cyclic saturated hydrocarbon groups having 3 to 20 carbon atoms include, for example, cyclic saturated hydrocarbon groups such as a cyclopropyl group, a cyclobutyl group, a cyclopentyl group, a cyclohexyl group, a cycloheptyl group, a cyclooctyl group, a norbornenyl group, a 1-adamantyl group and a 2-adamantyl group, and cyclic saturated hydrocarbon groups in which any hydrogen atom is replaced with a hydrocarbon group having 1 to 17 carbon atoms, such as a 3-methylcyclopentyl group, a 3-methylcyclohexyl group, a 4-methylcyclohexyl group, a 4-cyclohexylcyclohexyl group and a 4-phenylcyclohexyl group. The cyclic saturated hydrocarbon group preferably has 5 to 11 carbon atoms.

Examples of the linear unsaturated hydrocarbon groups having 2 to 20 carbon atoms include, for example, alkenyl groups such as an ethenyl group (vinyl group), a 1-propenyl group, a 2-propenyl group (allyl group) and a 1-methylethenyl group (isopropenyl group), and alkynyl groups such as an ethynyl group, a 1-propynyl group and a 2-propynyl group (propargyl group). The linear unsaturated hydrocarbon group preferably has 2 to 4 carbon atoms.

Examples of the cyclic unsaturated hydrocarbon groups having 3 to 20 carbon atoms include, for example, cyclic unsaturated hydrocarbon groups such as a cyclopentadienyl group, a norbornyl group, a phenyl group, a naphthyl group, an indenyl group, an azulenyl group, a phenanthryl group and an anthracenyl group, cyclic unsaturated hydrocarbon groups in which any hydrogen atom is replaced with a hydrocarbon group having 1 to 15 carbon atoms, such as a 3-methylphenyl group (m-tolyl group), a 4-methylphenyl group (p-tolyl group), a 4-ethylphenyl group, a 4-t-butylphenyl group, a 4-cyclohexylphenyl group, a biphenylyl group, a 3,4-dimethylphenyl group, a 3,5-dimethylphenyl group and a 2,4,6-trimethylphenyl group (mesityl group), and linear hydrocarbon groups or branched saturated hydrocarbon groups in which any hydrogen atom is replaced with a cyclic saturated hydrocarbon group or cyclic unsaturated hydrocarbon group having 3 to 19 carbon atoms, such as a benzyl group and a cumyl group. The cyclic unsaturated hydrocarbon group preferably has 6 to 10 carbon atoms.

Examples of the alkylene groups having 1 to 20 carbon atoms include, for example, a methylene group, an ethylene group, a dimethylmethylene group (isopropylidene group), an ethylmethylene group, a methylethylene group and a n-propylene group. The alkylene group preferably has 1 to 6 carbon atoms.

Examples of the arylene group having 6 to 20 carbon atoms include an o-phenylene group, a m-phenylene group, a p-phenylene group, and a 4,4'-biphenylene group, for example. The arylene group preferably has 6 to 12 carbon atoms.

Examples of the silicon-containing hydrocarbon group include alkylsilyl groups such as a trimethylsilyl group, a triethylsilyl group, a t-butyldimethylsilyl group, and a triisopropylsilyl group, which are groups in which carbon atoms are replaced with silicon atoms in the aforementioned hydrocarbon groups, arylsilyl groups such as a dimethylphenylsilyl group, a methyldiphenylsilyl group, and a t-butyldiphenylsilyl group, a pentamethyldisilanyl group, and a trimethylsilylmethyl group, for example. The alkylsilyl group preferably has 1 to 10 carbon atoms, and the arylsilyl group preferably has 6 to 18 carbon atoms.

R⁶ and R¹¹ are the same group as each other and are a hydrogen atom, a hydrocarbon group or a silicon-containing hydrocarbon group, and details of the hydrocarbon group and silicon-containing hydrocarbon group are as described above.

R⁷ and R¹⁰ are the same group as each other and are a hydrogen atom, a hydrocarbon group or a silicon-containing hydrocarbon group, and details of the hydrocarbon group and silicon-containing hydrocarbon group are as described above.

R⁶ and R⁷ are optionally bonded to a hydrocarbon having 2 to 3 carbon atoms to form a ring structure, and R¹⁰ and R¹¹ are optionally bonded to a hydrocarbon having 2 to 3 carbon atoms to form a ring structure.

R⁶, R⁷, R¹⁰ and R¹¹ are not simultaneously hydrogen atoms.

R¹³ and R¹⁴ are each independently a hydrogen atom, a hydrocarbon group or a silicon-containing hydrocarbon group, and are optionally linked to each other to form a ring structure.

Details of the hydrocarbon group and silicon-containing hydrocarbon group are as described above, and examples of the hydrocarbon group further include an aryl group and a substituted aryl group.

Examples of the aryl group are partially overlapped with examples of the cyclic unsaturated hydrocarbon groups having 3 to 20 carbon atoms, and include, for example, aromatic compound-derived substituents such as a phenyl group, a 1-naphthyl group, a 2-naphthyl group, an anthracenyl group, a phenanthrenyl group, a tetracenyl group, a chrysenyl group, a pyrenyl group, an indenyl group, an azulenyl group, a pyrrolyl group, a pyridyl group, a furanyl group and a thiophenyl group. The aryl group is preferably a phenyl group or a 2-naphthyl group.

Examples of the aromatic compound include, for example, aromatic hydrocarbon and heterocyclic aromatic compounds, such as benzene, naphthalene, anthracene, phenanthrene, tetracene, chrysene, pyrene, indene, azulene, pyrrole, pyridine, furan and thiophene.

Examples of such a substituted aryl group are partially overlapped with examples of the cyclic unsaturated hydrocarbon groups having 3 to 20 carbon atoms, and include groups, in which one or more hydrogen atoms in the aryl group are each substituted with at least one substituent selected from a hydrocarbon group having 1 to 20 carbon atoms, an aryl group, a silicon-containing group, a nitrogen-containing group, an oxygen-containing group, a halogen atom and a halogen-containing group, and specifically include a 3-methylphenyl group (m-tolyl group), a 4-methylphenyl group (p-tolyl group), a 3-ethylphenyl group, a 4-ethylphenyl group, a 3,4-dimethylphenyl group, a 3,5-dimethylphenyl group, a biphenylyl group, a 4-(trimethylsilyl)phenyl group, a 4-aminophenyl group, a 4-(dimethylamino)phenyl group, a 4-(diethylamino)phenyl group, a 4-morpholinylphenyl group, a 4-methoxyphenyl group, a 4-ethoxyphenyl group, a 4-phenoxyphenyl group, a 3,4-dimethoxyphenyl group, a 3,5-dimethoxyphenyl group, a 3-methyl-4-methoxyphenyl group, a 3,5-dimethyl-4-methoxyphenyl group, a 3-(trifluoromethyl)phenyl group, a 4-(trifluoromethyl)phenyl group, a 3-chlorophenyl group, a 4-chlorophenyl group, a 3-fluorophenyl group, a 4-fluorophenyl group, a 5-methylnaphthyl group and a 2-(6-methyl)pyridyl group.

### «Q»

Q is selected as a combination of the same or different members of a halogen atom, a hydrocarbon group having 1 to 20 carbon atoms, an anion ligand, and a neutral ligand capable of coordinating to a lone electron pair.

Examples of the halogen atom include a fluorine atom, a chlorine atom, a bromine atom, and an iodine atom, with the chlorine atom being preferred.

Details of the hydrocarbon group are as described above, and the hydrocarbon group preferably has 1 to 7 carbon atoms.

Examples of the anion ligand can include alkoxy groups such as a methoxy group, a t-butoxy group and a phenoxy group, carboxylate groups such as acetate and benzoate, and sulfonate groups such as methylate and tosylate.

Examples of the neutral ligand capable of coordinating to a lone electron pair can include, for example, phosphororganic compounds such as trimethylphosphine, triethylphosphine, triphenylphosphine and diphenylmethylphosphine, and ether compounds such as tetrahydrofuran, diethyl ether, dioxane and 1,2-dimethoxyethane.

### <<j>>

j is an integer of 1 to 4, and is preferably 2.

### (Exemplification of bridged metallocene compound (P))

Examples of the bridged metallocene compound (P) include a bridged metallocene compound (P1) in which either or both of R¹³ and R¹⁴ are aryl groups in (formula 1) above.

Examples of the bridged metallocene compound (P1) include a bridged metallocene compound (P2) wherein in (formula 1) above, both R¹³ and R¹⁴ are aryl groups and either one of R² and R³ is a saturated hydrocarbon group having 4 carbon atoms. Examples of the bridged metallocene compound (P2) include a bridged metallocene compound in which all the groups of R¹ to R⁴, except for the saturated hydrocarbon group having 4 carbon atoms, are hydrogen atoms, and a bridged metallocene compound in which two groups of R¹ to R⁴ adjacent to the saturated hydrocarbon group having 4 carbon atoms are hydrogen atoms and the groups that are not adjacent thereto are methyl groups.

Examples of the bridged metallocene compound (P) include:
[dimethylmethylene(η⁵-cyclopentadienyl)(η⁵-fluorenyl)]zirconium dichloride, [dimethylmethylene(η⁵-cyclopentadienyl) (η⁵-2,7-di-t-butylfluorenyl)]zirconium dichloride, [dimethylmethylene (η⁵-cyclopentadienyl) (η⁵-3,6-dit-butylfluorenyl)]zirconium dichloride, [dimethylmethylene (η⁵-cyclopentadienyl)(η⁵-octamethyloctahydrodibenzofluorenyl)]zirconium dichloride, [dimethylmethylene (η⁵-cyclopentadienyl)(η⁵-tetramethyloctahydrodibenzofluorenyl)]zirconium dichloride,
[cyclohexylidene(η⁵-cyclopentadienyl)(η⁵-fluorenyl)]zirconium dichloride, [cyclohexylidene(η⁵-cyclopentadienyl) (η⁵-2,7-di-t-butylfluorenyl)]zirconium dichloride, [cyclohexylidene(η⁵-cyclopentadienyl)(η⁵-3,6-di-t-butylfluorenyl)]zirconium dichloride, [cyclohexylidene(η⁵-cyclopentadienyl)(η⁵-octamethyloctahydrodibenzofluorenyl)]zirconium dichloride, [cyclohexylidene(η⁵-cyclopentadienyl)(η⁵-tetramethyloctahydrodibenzofluorenyl)]zirconium dichloride,
[diphenylmethylene (η⁵-cyclopentadienyl)(η⁵-fluorenyl)]zirconium dichloride, [diphenylmethylene(η⁵-cyclopentadienyl) (η⁵-2,7-di-t-butylfluorenyl)]zirconium dichloride, [diphenylmethylene (η⁵-2-methyl-4-t-butylcyclopentadienyl) (η⁵-2,7-di-t-butylfluorenyl)]zirconium dichloride, [diphenylmethylene (η⁵-cyclopentadienyl)(η⁵-3, 6-dit-butylfluorenyl)]zirconium dichloride, [diphenylmethylene(η⁵-cyclopentadienyl)(η⁵-octamethyloctahydrodibenzofluorenyl)]zirconium dichloride, [diphenylmethylene{η⁵-(2-methyl-4-i-propylcyclopentadienyl)} (η⁵-octamethyloctahydrodibenzofluorenyl)]zirconium dichloride, [diphenylmethylene (η⁵-cyclopentadienyl)(η⁵-tetramethyloctahydrodibenzofluorenyl)]zirconium dichloride,
[methylphenylmethylene(η⁵-cyclopentadienyl)(η⁵-fluorenyl)]zirconium dichloride, [methylphenylmethylene(η⁵-cyclopentadienyl) (η⁵-2,7-di-t-butylfluorenyl)]zirconium dichloride, [methylphenylmethylene (η⁵-cyclopentadienyl)(η⁵-3,6-di-t-butylfluorenyl)]zirconium dichloride, [methylphenylmethylene(η⁵-cyclopentadienyl)(η⁵-octamethyloctahydrodibenzofluorenyl)]zirconium dichloride, [methylphenylmethylene(η⁵-cyclopentadienyl)(η⁵-tetramethyloctahydrodibenzofluorenyl)]zirconium dichloride,
[methyl(3-methylphenyl)methylene(η⁵-cyclopentadienyl)(η⁵-fluorenyl)]zirconium dichloride, [methyl(3-methylphenyl)methylene(η⁵-cyclopentadienyl)(η⁵-2,7-di-t-butylfluorenyl)]zirconium dichloride, [methyl(3-methylphenyl)methylene(η⁵-cyclopentadienyl)(η⁵-3,6-di-t-butylfluorenyl)]zirconium dichloride, [methyl(3-methylphenyl)methylene (η⁵-cyclopentadienyl)(η⁵-octamethyloctahydrodibenzofluorenyl)]zirconium dichloride, [methyl(3-methylphenyl)methylene (η⁵-cyclopentadienyl)(η⁵-tetramethyloctahydrodibenzofluorenyl)]zirconium dichloride,
[methyl(4-methylphenyl)methylene (η⁵-cyclopentadienyl)(η⁵-fluorenyl)]zirconium dichloride, [methyl(4-methylphenyl)methylene(η⁵-cyclopentadienyl)(η⁵-2,7-di-t-butylfluorenyl)]zirconium dichloride, [methyl(4-methylphenyl)methylene(η⁵-cyclopentadienyl)(η⁵-3,6-di-t-butylfluorenyl)]zirconium dichloride, [methyl(4-methylphenyl)methylene(η⁵-cyclopentadienyl)(η⁵-octamethyloctahydrodibenzofluorenyl)]zirconium dichloride, [methyl(4-methylphenyl)methylene(η⁵-cyclopentadienyl)(η⁵-tetramethyloctahydrodibenzofluorenyl)]zirconium dichloride,
[diphenylsilylene (η⁵-cyclopentadienyl)(η⁵-fluorenyl)]zirconium dichloride, [diphenylsilylene(η⁵-cyclopentadienyl) (η⁵-2,7-di-t-butylfluorenyl)]zirconium dichloride, [diphenylsilylene(η⁵-cyclopentadienyl)(η⁵-3,6-dit-butylfluorenyl)]zirconium dichloride, [diphenylsilylene(η⁵-cyclopentadienyl)(η⁵-octamethyloctahydrodibenzofluorenyl)]zirconium dichloride, [diphenylsilylene(η⁵-cyclopentadienyl)(η⁵-tetramethyloctahydrodibenzofluorenyl)]zirconium dichloride,
[bis(3-methylphenyl)silylene (η⁵-cyclopentadienyl)(η⁵-fluorenyl)]zirconium dichloride, [bis(3-methylphenyl)silylene (η⁵-cyclopentadienyl)(η⁵-2,7-di-t-butylfluorenyl)]zirconium dichloride, [bis(3-methylphenyl)silylene (η⁵-cyclopentadienyl)(η⁵-3,6-di-t-butylfluorenyl)]zirconium dichloride, [bis(3-methylphenyl) silylene (η⁵-cyclopentadienyl)(η⁵-octamethyloctahydrodibenzofluorenyl)]zirconium dichloride, [bis(3-methylphenyl)silylene (η⁵-cyclopentadienyl)(η⁵-tetramethyloctahydrodibenzofluorenyl)]zirconium dichloride,
[dicyclohexylsilylene (η⁵-cyclopentadienyl)(η⁵-fluorenyl)]zirconium dichloride, [dicyclohexylsilylene(η⁵-cyclopentadienyl) (η⁵-2,7-di-t-butylfluorenyl)]zirconium dichloride, [dicyclohexylsilylene(η⁵-cyclopentadienyl)(η⁵-3,6-di-t-butylfluorenyl)]zirconium dichloride, [dicyclohexylsilylene(η⁵-cyclopentadienyl)(η⁵-octamethyloctahydrodibenzofluorenyl)]zirconium dichloride, [dicyclohexylsilylene(η⁵-cyclopentadienyl)(η⁵-tetramethyloctahydrodibenzofluorenyl)]zirconium dichloride,
[ethylene(η⁵-cyclopentadienyl)(η⁵-fluorenyl)]zirconium dichloride, [ethylene(η⁵-cyclopentadienyl)(η⁵-2,7-di-t-butylfluorenyl)]zirconium dichloride, [ethylene(η⁵-cyclopentadienyl) (η⁵-3,6-di-t-butylfluorenyl)]zirconium dichloride, [ethylene(η⁵-cyclopentadienyl)(η⁵-octamethyloctahydrodibenzofluorenyl)]zirconium dichloride, [ethylene(η⁵-cyclopentadienyl)(η⁵-tetramethyloctahydrodibenzofluorenyl)]zirconium dichloride,
ethylene [η⁵-(3-tert-butyl-5-methylcyclopentadienyl)] (η⁵-fluorenyl)zirconium dichloride, ethylene[η⁵-(3-tert-butyl-5-methylcyclopentadienyl)][η⁵-(3,6-di-tert-butylfluorenyl)]zirconium dichloride, ethylene[η⁵-(3-tert-butyl-5-methylcyclopentadienyl)][η⁵-(2,7-di-tert-butylfluorenyl)]zirconium dichloride, ethylene[η⁵-(3-tert-butyl-5-methylcyclopentadienyl)] (octamethyloctahydrodibenzofluorenyl) zirconium dichloride, ethylene[η⁵-(3-tert-butyl-5-methylcyclopentadienyl)] (benzofluorenyl) zirconium dichloride, ethylene[η⁵-(3-tert-butyl-5-methylcyclopentadienyl)] (dibenzofluorenyl) zirconium dichloride, ethylene[η⁵-(3-tert-butyl-5-methylcyclopentadienyl)] (octahydrodibenzofluorenyl) zirconium dichloride, ethylene[η⁵-(3-tert-butyl-5-methylcyclopentadienyl)] [η⁵-(2,7-diphenyl-3,6-di-tert-butylfluorenyl)]zirconium dichloride, ethylene[η⁵-(3-tert-butyl-5-methylcyclopentadienyl)][η⁵-(2,7-dimethyl-3,6-di-tert-butylfluorenyl)]zirconium dichloride,
ethylene [η⁵-(3-tert-butylcyclopentadienyl)] (η⁵-fluorenyl)zirconium dichloride, ethylene[η⁵-(3-tert-butylcyclopentadienyl)] [η⁵-(3,6-di-tert-butylfluorenyl)]zirconium dichloride, ethylene[η⁵-(3-tert-butylcyclopentadienyl)][η⁵-(2,7-di-tert-butylfluorenyl)]zirconium dichloride, ethylene[η⁵-(3-tert-butylcyclopentadienyl)](octamethyloctahydrodibenzofluorenyl)z irconium dichloride, ethylene[η⁵-(3-tert-butylcyclopentadienyl)](benzofluorenyl)zirconium dichloride, ethylene[η⁵-(3-tert-butylcyclopentadienyl)](dibenzofluorenyl)zirconium dichloride, ethylene[η⁵-(3-tert-butylcyclopentadienyl)] (octahydrodibenzofluorenyl)zirconium dichloride, ethylene[η⁵-(3-tert-butylcyclopentadienyl)][η⁵-(2,7-diphenyl-3,6-di-tert-butylfluorenyl)]zirconium dichloride, ethylene [η⁵-(3-tert-butylcyclopentadienyl)] [η⁵-(2,7-dimethyl-3,6-di-tert-butylfluorenyl)]zirconium dichloride,
ethylene[η⁵-(3-n-butylcyclopentadienyl)](η⁵-fluorenyl)zirconium dichloride, ethylene[η⁵-(3-n-butylcyclopentadienyl)][η⁵-(3,6-di-tert-butylfluorenyl)]zirconium dichloride, ethylene[η⁵-(3-n-butylcyclopentadienyl)][η⁵-(2,7-di-tert-butylfluorenyl)]zirconium dichloride, ethylene[η⁵-(3-n-butylcyclopentadienyl)](octamethyloctahydrodibenzofluorenyl)z irconium dichloride, ethylene[η⁵-(3-n-butylcyclopentadienyl)](benzofluorenyl)zirconium dichloride, ethylene[η⁵-(3-n-butylcyclopentadienyl)](dibenzofluorenyl)zirconium dichloride, ethylene [η⁵-(3-n-butylcyclopentadienyl)] (octahydrodibenzofluorenyl)zirconium dichloride, ethylene[η⁵-(3-n-butylcyclopentadienyl)] [η⁵-(2,7-diphenyl-3,6-di-tert-butylfluorenyl)]zirconium dichloride, ethylene [η⁵-(3-n-butylcyclopentadienyl)][η⁵-(2,7-dimethyl-3,6-di-tert-butylfluorenyl)]zirconium dichloride,
diphenylmethylene[η⁵-(3-tert-butyl-5-methylcyclopentadienyl)](η⁵-fluorenyl) zirconium dichloride, diphenylmethylene[η⁵-(3-tert-butyl-5-methylcyclopentadienyl)] [η⁵-(3,6-di-tert-butylfluorenyl)]zirconium dichloride, diphenylmethylene[η⁵-(3-tert-butyl-5-methylcyclopentadienyl)] [η⁵-(2,7-di-tert-butylfluorenyl)]zirconium dichloride, diphenylmethylene[η⁵-(3-tert-butyl-5-methylcyclopentadienyl)] (octamethyloctahydrodibenzofluorenyl) zirconium dichloride, diphenylmethylene[η⁵-(3-tert-butyl-5-methylcyclopentadienyl)] (benzofluorenyl)zirconium dichloride, diphenylmethylene[η⁵-(3-tert-butyl-5-methylcyclopentadienyl)] (dibenzofluorenyl) zirconium dichloride, diphenylmethylene[η⁵-(3-tert-butyl-5-methylcyclopentadienyl)] (octahydrodibenzofluorenyl)zirconium dichloride, diphenylmethylene[η⁵-(3-tert-butyl-5-methylcyclopentadienyl)] [η⁵-(2,7-diphenyl-3,6-di-tert-butylfluorenyl)]zirconium dichloride, diphenylmethylene[η⁵-(3-tert-butyl-5-methylcyclopentadienyl)][η⁵-(2,7-dimethyl-3,6-di-tert-butylfluorenyl)]zirconium dichloride,
diphenylmethylene[η⁵-(3-tert-butylcyclopentadienyl)](η⁵-fluorenyl)zirconium dichloride, diphenylmethylene[η⁵-(3-tert-butylcyclopentadienyl)][η⁵-(3,6-di-tert-butylfluorenyl)]zirconium dichloride, diphenylmethylene[η⁵-(3-tert-butylcyclopentadienyl)][η⁵-(2,7-di-tert-butylfluorenyl)]zirconium dichloride, diphenylmethylene[η⁵-(3-tert-butylcyclopentadienyl)] (octamethyloctahydrodibenzofluorenyl)z irconium dichloride, diphenylmethylene[η⁵-(3-tert-butylcyclopentadienyl)] (benzofluorenyl)zirconium dichloride, diphenylmethylene[η⁵-(3-tert-butylcyclopentadienyl)](dibenzofluorenyl)zirconium dichloride, diphenylmethylene[η⁵-(3-tert-butylcyclopentadienyl)] (octahydrodibenzofluorenyl)zirconium dichloride, diphenylmethylene[η⁵-(3-tert-butylcyclopentadienyl)][η⁵-(2,7-diphenyl-3,6-di-tert-butylfluorenyl)]zirconium dichloride, diphenylmethylene[η⁵-(3-tert-butylcyclopentadienyl)][η⁵-(2,7-dimethyl-3,6-di-tert-butylfluorenyl)]zirconium dichloride, diphenylmethylene[η⁵-(3-n-butylcyclopentadienyl)](η⁵-fluorenyl)zirconium dichloride, diphenylmethylene[η⁵-(3-n-butylcyclopentadienyl)][η⁵-(3,6-di-tert-butylfluorenyl)]zirconium dichloride, diphenylmethylene[η⁵-(3-n-butylcyclopentadienyl)][η⁵-(2,7-di-tert-butylfluorenyl)]zirconium dichloride, diphenylmethylene[η⁵-(3-n-butylcyclopentadienyl)] (octamethyloctahydrodibenzofluorenyl)z irconium dichloride, diphenylmethylene[η⁵-(3-n-butylcyclopentadienyl)] (benzofluorenyl)zirconium dichloride, diphenylmethylene[η⁵-(3-n-butylcyclopentadienyl)](dibenzofluorenyl)zirconium dichloride, diphenylmethylene[η⁵-(3-n-butylcyclopentadienyl)] (octahydrodibenzofluorenyl)zirconium dichloride, diphenylmethylene[η⁵-(3-n-butylcyclopentadienyl)][η⁵-(2,7-diphenyl-3,6-di-tert-butylfluorenyl)]zirconium dichloride, diphenylmethylene[η⁵-(3-n-butylcyclopentadienyl)][η⁵-(2,7-dimethyl-3,6-di-tert-butylfluorenyl)]zirconium dichloride,
di(p-tolyl)methylene[η⁵-(3-tert-butyl-5-methylcyclopentadienyl)](η⁵-fluorenyl) zirconium dichloride, di(p-tolyl)methylene[η⁵-(3-tert-butyl-5-methylcyclopentadienyl)][η⁵-(3,6-di-tert-butylfluorenyl)]zirconium dichloride, di(p-tolyl)methylene[η⁵-(3-tert-butyl-5-methylcyclopentadienyl)][η⁵-(2,7-di-tert-butylfluorenyl)]zirconium dichloride, di(p-tolyl)methylene[η⁵-(3-tert-butyl-5-methylcyclopentadienyl)] (octamethyloctahydrodibenzofluorenyl) zirconium dichloride, di(p-tolyl)methylene[η⁵-(3-tert-butyl-5-methylcyclopentadienyl)] (benzofluorenyl)zirconium dichloride, di(p-tolyl)methylene[η⁵-(3-tert-butyl-5-methylcyclopentadienyl)](dibenzofluorenyl)zirconium dichloride, di(p-tolyl)methylene[η⁵-(3-tert-butyl-5-methylcyclopentadienyl)] (octahydrodibenzofluorenyl)zirconium dichloride, di(p-tolyl)methylene[η⁵-(3-tert-butyl-5-methylcyclopentadienyl)][η⁵-(2,7-diphenyl-3,6-di-tert-butylfluorenyl)]zirconium dichloride, di(p-tolyl)methylene[η⁵-(3-tert-butyl-5-methylcyclopentadienyl)][η⁵-(2,7-dimethyl-3,6-di-tert-butylfluorenyl)]zirconium dichloride,
di(p-tolyl)methylene[η⁵-(3-tert-butylcyclopentadienyl)](η⁵-fluorenyl)zirconium dichloride, di(p-tolyl)methylene[η⁵-(3-tert-butylcyclopentadienyl)][η⁵-(3,6-di-tert-butylfluorenyl)]zirconium dichloride, di(p-tolyl)methylene[η⁵-(3-tert-butylcyclopentadienyl)][η⁵-(2,7-di-tert-butylfluorenyl)]zirconium dichloride, di(p-tolyl)methylene[η⁵-(3-tert-butylcyclopentadienyl)] (octamethyloctahydrodibenzofluorenyl)z irconium dichloride, di(p-tolyl)methylene[η⁵-(3-tert-butylcyclopentadienyl)] (benzofluorenyl)zirconium dichloride, di(p-tolyl)methylene[η⁵-(3-tert-butylcyclopentadienyl)](dibenzofluorenyl)zirconium dichloride, di(p-tolyl)methylene[η⁵-(3-tert-butylcyclopentadienyl)] (octahydrodibenzofluorenyl)zirconium dichloride, di(p-tolyl)methylene[η⁵-(3-tert-butylcyclopentadienyl)][η⁵-(2,7-diphenyl-3,6-di-tert-butylfluorenyl)]zirconium dichloride, di(p-tolyl)methylene[η⁵-(3-tert-butylcyclopentadienyl)][η⁵-(2,7-dimethyl-3,6-di-tert-butylfluorenyl)]zirconium dichloride,
di(p-tolyl)methylene[η⁵-(3-n-butylcyclopentadienyl)](η⁵-fluorenyl)zirconium dichloride, di(p-tolyl)methylene[η⁵-(3-n-butylcyclopentadienyl)] [η⁵-(3,6-di-tert-butylfluorenyl)]zirconium dichloride, di(p-tolyl)methylene[η⁵-(3-n-butylcyclopentadienyl)][η⁵-(2,7-di-tert-butylfluorenyl)]zirconium dichloride, di(p-tolyl)methylene[η⁵-(3-n-butylcyclopentadienyl)](octamethyloctahydrodibenzfluorenyl)zi rconium dichloride, di(p-tolyl)methylene[η⁵-(3-n-butylcyclopentadienyl)](benzofluorenyl)zirconium dichloride, di(p-tolyl)methylene[η⁵-(3-n-butylcyclopentadienyl)] (dibenzofluorenyl) zirconium dichloride, di(p-tolyl)methylene[η⁵-(3-n-butylcyclopentadienyl)](octahydrodibenzofluorenyl)zirconium dichloride, di(p-tolyl)methylene[η⁵-(3-n-butylcyclopentadienyl)](2,7-diphenyl-3,6-di-tert-butylfluorenyl)zirconium dichloride, and di(p-tolyl)methylene[η⁵-(3-n-butylcyclopentadienyl)][η⁵-(2,7-dimethyl-3,6-di-tert-butylfluorenyl)]zirconium dichloride.

Examples of the bridged metallocene compound (P) further include, for example, a compound in which a zirconium atom is replaced with a hafnium atom or a titanium atom, and a compound in which a chloro ligand is replaced with a methyl group. Herein, η⁵-tetramethyloctahydrodibenzofluorenyl and η⁵-octamethyloctahydrodibenzofluorenyl, as constituent portions of the bridged metallocene compound (P) exemplified represent a 4,4,7,7-tetramethyl-(5a,5b,11a,12,12a-η⁵)-1,2,3,4,7,8,9,10-octahydrodibenzo[b,H]fluorenyl group and a 1,1,4,4,7,7,10,10-octamethyl-(5a,5b,11a,12,12a-η⁵)-1,2,3,4,7,8,9,10-octahydrodibenzo[b,H]fluorenyl group, respectively.

These bridged metallocene compounds (P) may be used singly or in combinations of two or more thereof.

### [Compound (Q)]

The compound (Q) is at least one compound selected from the group consisting of an organometallic compound (Q-1), an organoaluminumoxy compound (Q-2), and a compound that reacts with the bridged metallocene compound (P) to form an ion pair (Q-3).

Examples of the organometallic compound (Q-1) specifically include organometallic compounds (Q-1a), (Q-1b) and (Q-1c) as described below, including Groups I and II elements and Groups XII and XIII elements in the periodic table.

(Q-1a) An organoaluminum compound represented by general formula R^{a}ₘAl(OR^{b})ₙHₚX_{q}:
wherein in the formula, R^{a} and R^{b} may be the same as or different from each other and each represents a hydrocarbon group having 1 to 15 carbon atoms, preferably 1 to 4 carbon atoms, and X represents a halogen atom, m is a number of 0 < m ≤ 3, n is a number of 0 ≤ n < 3, p is a number of 0 ≤ p < 3, q is a number of 0 ≤ q < 3, and m + n + p + q = 3 is satisfied.

Examples of such a compound can include:
tri-n-alkylaluminum such as trimethylaluminum, triethylaluminum, tri-n-butylaluminum, tri-n-hexylaluminum and tri-n-octylaluminum,
tri-branched alkylaluminum such as triisopropylaluminum, triisobutylaluminum, tri-sec-butylaluminum, tri-t-butylaluminum, tri-2-methylbutylaluminum, tri-3-methylhexylaluminum and tri-2-ethylhexylaluminum, tricycloalkylaluminum such as tricyclohexylaluminum and tricyclooctylaluminum, triarylaluminum such as triphenylaluminum and tri(4-methylphenyl)aluminum, dialkylaluminum hydrides such as diisopropylaluminum hydride and diisobutylaluminum hydride,
alkenylaluminum represented by general formula (i-C₄H₉)ₓAl_{y}(C₅H₁₀)_{z} (wherein x, y and z are positive numbers and z ≤ 2x is satisfied.), such as isoprenylaluminum,
alkylaluminum alkoxides such as isobutylaluminum methoxide and isobutylaluminum ethoxide,
dialkylaluminum alkoxides such as dimethylaluminum methoxide, diethylaluminum ethoxide and dibutylaluminumbutoxide,
alkylaluminum sesquialkoxides such as ethylaluminum sesquiethoxide and butylaluminum sesquibutoxide,
partially alkoxylated alkylaluminum having an average compositional ratio represented by, for example, general formula R^{a}_{2.5}Al(OR^{b})_{0.5},
alkylaluminum aryloxides such as diethylaluminum phenoxide and diethylaluminum(2,6-di-t-butyl-4-methylphenoxide),
dialkylaluminum halides such as dimethylaluminum chloride, diethylaluminum chloride, dibutylaluminum chloride, diethylaluminum bromide and diisobutylaluminum chloride,
alkylaluminum sesquihalides such as ethylaluminum sesquichloride, butylaluminum sesquichloride and ethylaluminum sesquibromide,
partially halogenated alkylaluminum of, for example, alkylaluminum dihalides such as ethylaluminum dichloride,
dialkylaluminum hydrides such as diethylaluminum hydride and dibutylaluminum hydride,
alkylaluminum dihydrides such as ethylaluminum dihydride and propylaluminum dihydride and other partially hydrogenated alkylaluminum, and
partially alkoxylated and halogenated alkylaluminum such as ethylaluminum ethoxychloride, butylaluminum butoxychloride and ethylaluminum ethoxybromide, for example. A compound similar to the compound represented by the general formula R^{a}ₘAl(OR^{b})ₙHₚX_{q} can also be used, and examples thereof can include an organoaluminum compound in which two or more aluminum compounds are bonded via a nitrogen atom. Specific examples of such a compound can include (C₂H₅)₂AlN(C₂H₅)Al(C₂H₅)₂.

(Q-1b) A complex alkylated compound represented by general formula M²AlR^{a}₄, including a Group I metal in the periodic table and aluminum: wherein M² represents Li, Na or K, and R^{a} represents a hydrocarbon group having 1 to 15, preferably 1 to 4 carbon atoms.

Examples of such a compound can include LiAl(C₂H₅)₄ and LiAl(C₇H₁₅)₄.

(Q-1c) A dialkyl compound represented by general formula R^{a}R^{b}M³, including a Group II or Group XII metal in the periodic table: wherein R^{a} and R^{b} may be the same as or different from each other and each represents a hydrocarbon group having 1 to 15, preferably 1 to 4 carbon atoms, and M³ is Mg, Zn or Cd.

A conventionally known aluminoxane can be used as it is, as the organoaluminumoxy compound (Q-2). Specific examples can include a compound represented by the following general formula [III] and a compound represented by the following general formula [IV].

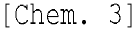

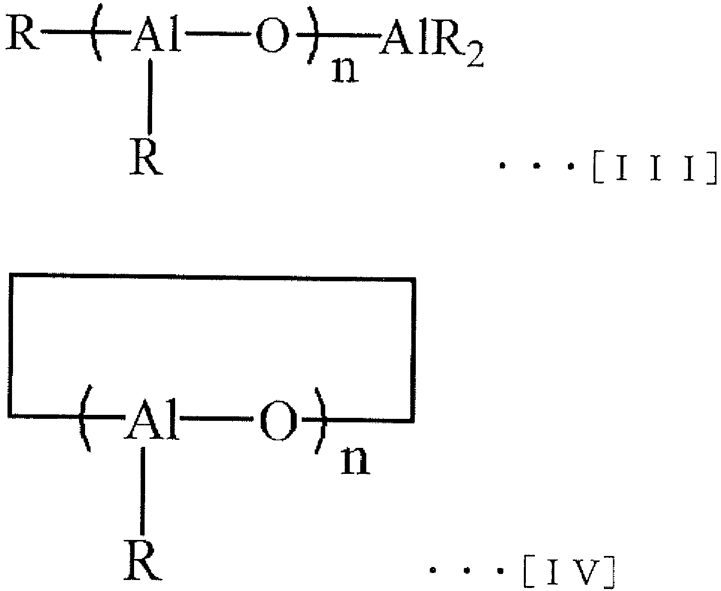

In the formulas [III] and [IV], R represents a hydrocarbon group having 1 to 10 carbon atoms, and n represents an integer of 2 or more.

In particular, methylaluminoxane is utilized in which R is a methyl group and n is 3 or more, preferably 10 or more. An organoaluminum compound is allowed to be slightly incorporated in such aluminoxane.

When copolymerization of ethylene and a C3 or higher α-olefin is performed at a high temperature in the present invention, a benzene-insoluble organoaluminumoxy compound exemplified in JPH2(1990)-78687A can also be applied. An organoaluminumoxy compound described in JPH2(1990)-167305A, or aluminoxane having two or more alkyl groups described in JPH2(1990)-24701A and JPH3(1991)-103407A, can also be suitably utilized. The "benzene-insoluble organoaluminumoxy compound" that may be used in the present invention is a compound that usually contains 10% or less, preferably 5% or less, particularly preferably 2% or less of an Al component to be dissolved in benzene at 60°C, in terms of Al atom, and that is insoluble or hardly soluble in benzene.

Examples of the organoaluminum oxy compound (Q-2) can also include modified methylaluminoxane represented by the following general formula [V].

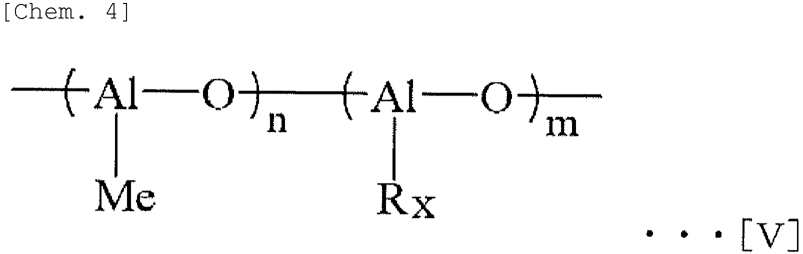

In the formula [V], R represents a hydrocarbon group having 1 to 10 carbon atoms, and m and n each independently represent an integer of 2 or more.

Methylaluminoxane as one example of the organoaluminumoxy compound (Q-2) is easily available and has high polymerization activity, and thus is commonly used as an activator in polyolefin polymerization. However, methylaluminoxane has been used in solutions of aromatic hydrocarbons such as toluene or benzene, which are environmentally undesirable, because it is difficult to dissolve in saturated hydrocarbons. For this reason, a flexible body of methylaluminoxane represented by formula [V] has recently been developed and used as an aluminoxane dissolved in a saturated hydrocarbon. Such modified methylaluminoxane represented by the formula [V] is prepared by using trimethylaluminum and alkylaluminum other than trimethylaluminum as described in, for example, US4960878B and US5041584B, and, for example, is prepared by using trimethylaluminum and triisobutylaluminum. Aluminoxane in which Rx is an isobutyl group is commercially available, in the form of a solution in a saturated hydrocarbon, under any of trade names MMAO and TMAO (see Tosoh Finechem Corporation, Tosoh Research & Technology Review, Vol 47, 55 (2003)).

Examples of the organoaluminumoxy compound (Q-2) can further include an organoaluminumoxy compound represented by the following general formula [VI], containing boron.

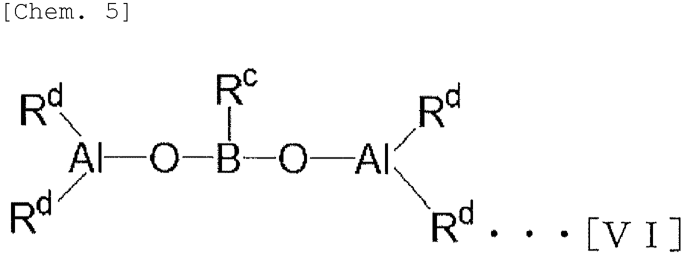

In the formula [VI], R^{c} represents a hydrocarbon group having 1 to 10 carbon atoms. R^{d} are the same as or different from each other, and each represents a hydrogen atom, a halogen atom or a hydrocarbon group having 1 to 10 carbon atoms.

Examples of the compound (Q-3) that react with the bridged metallocene compound (P) to form an ionic pair (hereinafter may be abbreviated as "ionized ionic compound" or simply "ionic compound") include Lewis acids, ionic compounds, borane compounds and carborane compounds, which are described in JPH1(1989)-501950A, JPH1(1989)-502036A, JPH3(1991)-179005A, JPH3(1991)-179006A, JPH3(1991)-207703A, JPH3(1991)-207704A, and US5321106B, for example. Examples can further include heteropoly compounds and isopoly compounds.

The ionized ionic compound preferably used in the present invention is a boron compound represented by the following general formula [VII].

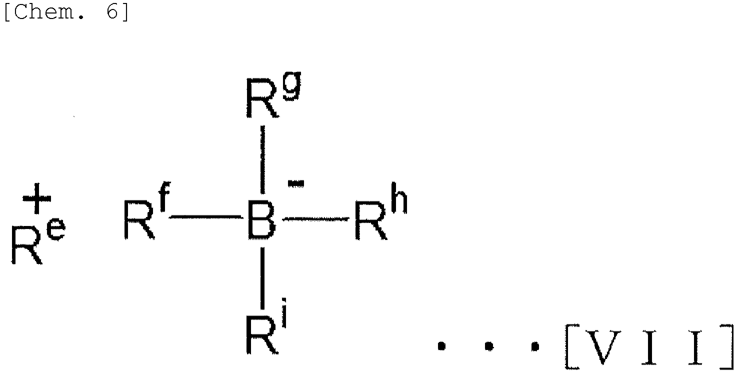

Examples of R^{e+} in the formula [VII] include H⁺, carbenium cation, oxonium cation, ammonium cation, phosphonium cation, cycloheptyltrienyl cation, and ferrocenium cation having a transition metal. R^{f} to Rⁱ may be the same as or different from each other, and are each a substituent selected from a hydrocarbon group having 1 to 20 carbon atoms, a silicon-containing group, a nitrogen-containing group, an oxygen-containing group, a halogen atom and a halogen-containing group, preferably a substituted aryl group.

Specific examples of the carbenium cation include, for example, tri-substituted carbenium cations such as triphenylcarbenium cation, tris(4-methylphenyl)carbenium cation and tris(3,5-dimethylphenyl)carbenium cation.

Specific examples of the ammonium cation include, for example, trialkyl-substituted ammonium cations such as trimethylammonium cation, triethylammonium cation, tri(n-propyl)ammonium cation, triisopropylammonium cation, tri(n-butyl)ammonium cation and triisobutylammonium cation, N,N-dialkylanilinium cations such as N,N-dimethylanilinium cation, N,N-diethylanilinium cation and N,N-2,4,6-pentamethylanilinium cation, and dialkylammonium cations such as diisopropylammonium cation and dicyclohexylammonium cation.

Specific examples of the phosphonium cation include, for example, triarylphosphonium cations such as triphenylphosphonium cation, tris(4-methylphenyl)phosphonium cation and tris(3,5-dimethylphenyl)phosphonium cation.

R^{e+}, among the above specific examples, is preferably, for example, the carbenium cation or the ammonium cation, particularly preferably triphenylcarbenium cation, N,N-dimethylanilinium cation or N,N-diethylanilinium cation.

Examples of the carbenium cation-containing compound as the ionized ionic compound preferably used in the present invention can include, for example, triphenylcarbenium tetraphenylborate, triphenylcarbenium tetrakis(pentafluorophenyl)borate, triphenylcarbenium tetrakis{3,5-di-(trifluoromethyl)phenyl}borate, tris(4-methylphenyl)carbenium tetrakis(pentafluorophenyl)borate and tris(3,5-dimethylphenyl)carbenium tetrakis(pentafluorophenyl)borate.

Examples of the trialkyl-substituted ammonium cation-containing compound as the ionized ionic compound preferably used in the present invention can include, for example, triethylammonium tetraphenylborate, tripropylammonium tetraphenylborate, tri(n-butyl)ammonium tetraphenylborate, trimethylammonium tetrakis(4-methylphenyl)borate, trimethylammonium tetrakis(2-methylphenyl)borate, tri(n-butyl)ammonium tetrakis(pentafluorophenyl)borate, triethylammonium tetrakis(pentafluorophenyl)borate, tripropylammonium tetrakis(pentafluorophenyl)borate, tripropylammonium tetrakis(2,4-dimethylphenyl)borate, tri(n-butyl)ammonium tetrakis(3,5-dimethylphenyl)borate, tri(n-butyl)ammonium tetrakis{4-(trifluoromethyl)phenyl}borate, tri(n-butyl)ammonium tetrakis{3,5-di(trifluoromethyl)phenyl}borate, tri(n-butyl)ammonium tetrakis(2-methylphenyl)borate, dioctadecylmethylammonium tetraphenylborate, dioctadecylmethylammonium tetrakis(4-methylphenyl)borate, dioctadecylmethylammonium tetrakis(4-methylphenyl)borate, dioctadecylmethylammonium tetrakis(pentafluorophenyl)borate, dioctadecylmethylammonium tetrakis(2,4-dimethylphenyl)borate, dioctadecylmethylammonium tetrakis(3,5-dimethylphenyl)borate, dioctadecylmethylammonium tetrakis{4-(trifluoromethyl)phenyl}borate, dioctadecylmethylammonium tetrakis{3,5-di(trifluoromethyl)phenyl}borate and dioctadecylmethylammonium.

Examples of the N,N-dialkylanilinium cation-containing compound as the ionized ionic compound preferably used in the present invention can include, for example, N,N-dimethylanilinium tetraphenylborate, N,N-dimethylanilinium tetrakis(pentafluorophenyl)borate, N,N-dimethylanilinium tetrakis{3,5-di(trifluoromethyl)phenyl}borate, N,N-diethylanilinium tetraphenylborate, N,N-diethylanilinium tetrakis(pentafluorophenyl)borate, N,N-diethylanilinium tetrakis{3,5-di(trifluoromethyl)phenyl}borate, N,N-2,4,6-pentamethylanilinium tetraphenylborate and N,N-2,4,6-pentamethylanilinium tetrakis(pentafluorophenyl)borate.

Examples of the dialkylammonium cation-containing compound as the ionized ionic compound preferably used in the present invention can include, for example, di-n-propylammonium tetrakis(pentafluorophenyl)borate and dicyclohexylammonium tetraphenylborate.

Other ionic compounds exemplified in JP2004-51676A can also be used without any limitation.

The above ionic compounds (Q-3) can be used singly or in a mixture of two or more thereof.

Examples of the configuration of the catalyst system include the following [1] to [4].
[1] The catalyst system includes the bridged metallocene compound (P) and the compound (Q-2).
[2] The catalyst system includes the bridged metallocene compound (P), the compound (Q-1) and the compound (Q-2).
[3] The catalyst system includes the bridged metallocene compound (P), the compound (Q-1) and the compound (Q-3).
[4] The catalyst system includes the bridged metallocene compound (P), the compound (Q-2) and the compound (Q-3).

The bridged metallocene compound (P), and the compounds (Q-1) to (Q-3) may be introduced into the reaction system in any order.

### [Carrier (R)]

The olefin polymerization catalyst including the bridged metallocene compound (P) and the compound (Q) may further include a carrier (R).

The carrier (R) optionally used in the present invention is an inorganic or organic compound and is a granular or fine particulate solid. In particular, the inorganic compound is preferably porous oxide, inorganic chloride, clay, clay mineral or an ion-exchangeable layered compound.

The porous oxide used can be specifically, for example, SiO₂, Al₂O₃, MgO, ZrO, TiO₂, B₂O₃, CaO, ZnO, BaO or ThO₂, or a composite or a mixture including such an oxide, for example, natural or synthetic zeolite, SiO₂-MgO, SiO₂-Al₂O₃, SiO₂-TiO₂, SiO₂-V₂O₅, SiO₂-Cr₂O₃ or SiO₂-TiO₂-MgO. In particular, one mainly containing SiO₂ and/or Al₂O₃ is preferable. Such porous oxide differs in properties depending on the type and the production method, and the carrier preferably used in the present invention has a particle size in a range from 0.5 to 300 pm, preferably 1.0 to 200 pm, a specific surface area in a range from 50 to 1000 m²/g, preferably 100 to 700 m²/g, and a pore volume in a range from 0.3 to 3.0 cm³/g. Such a carrier is, if necessary, calcinated at 100 to 1000°C, preferably 150 to 700°C, and then used.

The inorganic chloride used is, for example, MgCl₂, MgBr₂, MnCl₂ or MnBr₂. The inorganic chloride may be used as it is, or may be pulverized by a ball mill or a vibrating mill, and then used. Alternatively, the inorganic chloride, which is dissolved in a solvent such as an alcohol and then precipitated in the form of fine particles by a precipitating agent, may also be used.

Clay is usually constituted with clay mineral as a main component. The ion-exchangeable layered compound is a compound having a crystal structure in which surfaces configured are mutually stacked in parallel by a weak bonding force with, for example, an ionic bond, and includes an exchangeable ion. Most clay mineral corresponds to such an ion-exchangeable layered compound. Such clay, clay mineral, and ion-exchangeable layered compound herein used are not limited to natural products, and can also be artificially synthesized products. Examples of the clay, clay mineral or ion-exchangeable layered compound can include clay, clay mineral, and ionic crystalline compounds having a layered crystal structure, such as a hexagonal closest packing type, an antimony type, a CdCl₂ type and a CdI₂ type. Examples of such clay and clay mineral include, for example, kaolin, bentonite, kibushi clay, gairome clay, allophane, hisingerite, pyrophyllite, micas, montmorillonites, vermiculite, chlorite rocks, palygorskite, kaolinite, nacrite, dickite and halloysite, and examples of such an ion-exchangeable layered compound include, for example, crystalline acidic salts of polyvalent metals, such as α-Zr(HAsO₄)₂·H₂O, α-Zr(HPO₄)₂, α-Zr(KPO₄)₂·3H₂O, α-Ti(HPO₄)₂, α-Ti(HAsO₄)₂·H₂O, α-Sn(HPO₄)₂·H₂O, γ-Zr(HPO₄)₂, γ-Ti(HPO₄)₂ and γ-Ti(NH₄PO₄)₂·H₂O. The clay and the clay mineral for use in the present invention are also preferably subjected to a chemical treatment. The chemical treatment herein used can be any treatment such as a surface treatment for removal of impurities attached to a surface, or a treatment having an effect on the crystal structure of the clay. Specific examples of the chemical treatment include an acid treatment, an alkali treatment, a salt treatment and an organic substance treatment.

The ion-exchangeable layered compound may be a layered compound where a space between layers is enlarged by exchanging an exchangeable ion in the space between layers with another large and bulky ion by means of ion exchangeability. Such a bulky ion serves as a shore supporting a layered structure, and is usually referred to as a pillar. Such introduction of another substance (guest compound) into the space between layers in the layered compound is referred to as intercalation. Examples of the guest compound include, for example, cationic inorganic compounds such as TiCl₄ and ZrCl₄, metal alkoxides (R represents, for example, a hydrocarbon group) such as Ti(OR)₄, Zr(OR)₄, PO(OR)₃ and B(OR)₃, and metal hydroxide ions such as [Al₁₃O₄(OH)₂₄]⁷⁺, [Zr₄(OH)₁₄]²⁺ and [Fe₃O(OCOCH₃)₆]⁺. These compounds may be used singly or in combinations of two or more thereof. In intercalation of such a compound, for example, a polymerized product obtained by hydrolytic polycondensation of a metal alkoxide (R represents, for example, a hydrocarbon group) such as Si(OR)₄, Al(OR)₃ or Ge(OR)₄, or a colloidal inorganic compound such as SiO₂ can also co-exist. Examples of the pillar include oxide generated by intercalation of the metal hydroxide ion into the space between layers and then heating and dehydration.

In particular, the clay or the clay mineral is preferable, and montmorillonite, vermiculite, pectolite, tainiolite and synthetic mica are particularly preferable.

Examples of the organic compound as the carrier (R) can include a granular or fine particulate solid having a particle size in a range from 0.5 to 300 pm. Specific examples can include a (co)polymer or vinylcyclohexane generated with as a main component a C2-C14 α-olefin such as ethylene, propylene, 1-butene or 4-methyl-1-pentene, a (co)polymer generated with styrene as a main component, and modified products thereof.

The usage method and the order of addition of each component of the polymerization catalyst can be selected without limitation. At least two or more components in the catalyst may be contacted with each other in advance.

The bridged metallocene compound (P) (hereinafter also referred to as "component (P)") is usually used in an amount of 1 × 10⁻⁹ to 1 × 10⁻¹ mol, preferably 1 × 10⁻⁸ to 1 × 10⁻² mol per liter of reaction volume.

The organometallic compound (Q-1) (hereinafter also referred to as "component (Q-1)") is used in an amount so that a molar ratio of component (Q-1) to the transition metal atom (M) in the component (P) [(Q-1)/M] is usually 0.01 to 50,000 and preferably 0.05 to 10,000.

The organoaluminumoxy compound (Q-2) (hereinafter, also referred to as "component (Q-2)".) is used in an amount so that the molar ratio of the aluminum atom in the component (Q-2) to the transition metal atom (M)[(Q-2)/M] in the component (P) is usually 10 to 5,000, preferably 20 to 2,000.

The ionic compound (Q-3) (hereinafter, also referred to as "component (Q-3)") is used in an amount so that the molar ratio of the component (Q-3) to the transition metal atom (M) in the component (P)[(Q-3)/M] is usually 1 to 10,000, preferably 1 to 5,000.

The polymerization temperature is usually -50°C to 300°C, preferably 30 to 250°C, more preferably 100°C to 250°C, further preferably 130°C to 200°C. As the temperature in the polymerization temperature region in the above range is higher, a solution viscosity upon polymerization is lower and removal of heat of polymerization is also easier. The polymerization pressure is usually ordinary pressure to 10 MPa-gauge pressure (MPa-G), preferably ordinary pressure to 8 MPa-G.

The polymerization reaction can be carried out in any method of batchwise, semi-continuous, and continuous methods. Such polymerization can also be continuously carried out in two or more polymerization instruments different in reaction conditions.

The molecular weight of the resulting copolymer can be regulated by the changes in hydrogen concentration and polymerization temperature in a polymerization system. The molecular weight can also be adjusted by the amount of compound (Q) used. In the case of addition of hydrogen, the amount added is properly about 0.001 to 5,000 NL per kg of the copolymer.

The polymerization solvent for use in a liquid phase polymerization method is usually an inert hydrocarbon solvent, and is preferably a saturated hydrocarbon having a boiling point of 50°C to 200°C under ordinary pressure. Specific examples of the polymerization solvent include aliphatic hydrocarbons such as propane, butane, pentane, hexane, heptane, octane, decane, dodecane and kerosene oil, and alicyclic hydrocarbons such as cyclopentane, cyclohexane and methylcyclopentane, and particularly preferably include hexane, heptane, octane, decane and cyclohexane. The α-olefin to be polymerized, by itself, can also be used as the polymerization solvent. While an aromatic hydrocarbon such as benzene, toluene or xylene, or a halogenated hydrocarbon such as ethylene chloride, chlorobenzene or dichloromethane can also be used as the polymerization solvent, use thereof is not preferable in terms of reduction in load on the environment and in terms of minimization of the influence on human health.

### (Graft modification)

The ethylene·α-olefin copolymer (Y) may be graft modified to impart some polar groups, but is preferably not graft modified.

Examples of a vinyl compound having a polar group used for graft modification include a vinyl compound having an oxygen-containing group such as an acid, acid anhydride, ester, alcohol, epoxy, or ether, a vinyl compound having a nitrogen-containing group such as an isocyanate or amide, and a vinyl compound having a silicon-containing group such as vinyl silane.

Among them, the vinyl compound having an oxygen-containing group is preferred, specifically, it is more preferably an unsaturated epoxy monomer, an unsaturated carboxylic acid and derivatives thereof, further preferably an unsaturated dicarboxylic acid and anhydrides thereof, and particularly preferably maleic acid, Nadic acid^{™}, and acid anhydrides thereof.

The graft modification can be carried out by conventionally known methods.

### <Content of ethylene·α-olefin copolymer (Y)>

The content of the ethylene·α-olefin copolymer (Y) in the resin composition of the present invention is preferably 0.001 to 20 parts by mass, more preferably 0.002 to 15 parts by mass, further preferably 0.005 to 10 parts by mass, still further preferably 0.01 to 5 parts by mass, and particularly preferably 0.1 to 3 parts by mass, relative to 100 parts by mass of the resin (X).

When the content of the ethylene·α-olefin copolymer (Y) is the lower limit value or more, the defoaming properties (foam suppressing properties and foam breaking properties) by the ethylene·α-olefin copolymer (Y) are fully exhibited. When the content is the upper limit value or less, the ethylene·α-olefin copolymer (Y) hardly bleeds out from the resin composition of the present invention and a cured product thereof.

### (Additional constituent)

In addition to the resin (X) and the ethylene·α-olefin copolymer (Y), the resin composition of the present invention may include an additional constituent such as a catalyst (curing agent), a solvent, a plasticizer, a filler, a coloring agent, or an additive, if necessary.

In a case in which the resin (X) is the two-component curable urethane resin that is the curable resin (X1), the "additional constituent" is preferably included in the liquid B.

### (Catalyst)

In the case of the resin (X) being the curable resin (X1), a catalyst, i.e., a curing catalyst, can be included in the resin composition of the present invention for the purpose of accelerating curing of the curable resin (X1).

The catalyst is not particularly limited, but examples thereof include a catalyst in liquid form at ordinary temperature and a solid catalyst. It is preferably a catalyst in liquid form at ordinary temperature and more preferably an ordinary temperature curable catalyst. The liquid catalyst may be combined for use with a solid catalyst to the extent that it does not prevent an effect of the present invention.

Examples of the catalyst include an amine-based compound such as an aliphatic polyamine, an alicyclic polyamine, a polyamide polyamine, or a polymercaptan and modified compounds thereof, and compounds such as tin, bismuth, lead, nickel, and cobalt; and these may be used singly or in a mixture of two or more thereof.

Specific examples of the catalyst include triethylamine, tripropylamine, N-methylmorpholine, triethanolamine, triethylenediamine, 1,1'-dichloro-4,4'-diaminodiphenylmethane, 1,1',2,2'-tetrachloro-4,4'-diaminodiphenylmethane, di(methylthio)toluenediamine, dimorpholinodiethylene glycol, tin acetate, tin octylate, tin oleate, tin laurate, dibutyltin diacetate, dibutyltin dilaurate, bismuth octylate, bismuth neodecanoate, lead octylate, lead naphthenate, nickel naphthenate, and cobalt octylate.

Addition of the catalyst can control reactivity of a curable resin composition. Regarding the reactivity of the curable resin composition, a finger touch time defined in JIS K5400 is preferably 2 to 3600 seconds and more preferably 2 to 1800 seconds.

### (Solvent)

The solvent is not particularly limited, and examples thereof include, for example, aromatic hydrocarbons such as xylene, toluene, and ethylbenzene, aliphatic hydrocarbons such as hexane, heptane, octane, and decane, alicyclic hydrocarbons such as cyclohexane, cyclohexene, and methylcyclohexane, ester-based solvents such as ethyl acetate, n-butyl acetate, cellosolve acetate, propylene glycol monomethyl ether acetate, propylene glycol monoethyl ether acetate, 3-methoxybutyl acetate, ethylene glycol monoethyl ether acetate, ethylene glycol monomethyl ether acetate, diethylene glycol monoethyl ether acetate, and diethylene glycol monomethyl ether acetate, ketone-based solvents such as methyl ethyl ketone and methyl isobutyl ketone, acetone, and tetrahydrofuran, for example. Among them, the aromatic hydrocarbon can be preferably used.

### (Plasticizer)

The plasticizer is not particularly limited, but examples thereof include, for example, esters of phthalic anhydride and alcohols, such as dibutyl phthalate (abbreviated as DBP), dioctyl phthalate (also known as bis 2-ethylhexyl phthalate, abbreviated as DEHP, DOP, and DEHA), and diisononyl phthalate (abbreviated as DINP), esters of adipic acid and alcohols, such as dioctyl adipate (also known as bis 2-ethylhexyl adipate, abbreviated as DEHA, DOA), tricresyl phosphate, trioctyl phosphate, epoxidized soybean oil, and modified castor oil. Among them, a phthalate-based plasticizer is less likely to bleed out and can be suitably used. The content of the plasticizer in the resin composition of the present invention is 100 parts by mass or less, preferably 1 to 80 parts by mass, and further preferably 5 to 50 parts by mass, relative to 100 parts by mass of resin (X). The content thereof in the entire resin composition, on the other hand, is 50% by mass, or less, preferably 1 to 40% by mass, and preferably 1 to 30% by mass.

### (Filler)

The filler is preferably inorganic fillers and examples thereof include powder fillers such as mica, carbon black, silica, calcium carbonate, talc, graphite, stainless steel, aluminum, aluminum hydroxide, calcium sulfate, barium sulfate, and zinc oxide; and fibrous fillers such as a glass fiber and metal fiber, for example. The content of the filler in the resin composition of the present invention is desirably 150 parts by mass or less, preferably 10 to 120 parts by mass, and more preferably 30 to 100 parts by mass, relative to 100 parts by mass of the resin (X). The content in the entire resin composition, on the other hand, is 60% by mass or less, preferably 10 to 55% by mass, and 20 to 50% by mass.

### (Coloring agent)

The coloring agent is not particularly limited, and includes, for example, titanium dioxide, carbon black, Bengal red, chromium oxide, ultramarine, Phthalocyanine Green, and Phthalocyanine Blue.

### (Additive)

Examples of the additive include conventionally known defoamers not applicable to the ethylene·α-olefin copolymer (Y), a leveling agent, an anti-flooding and anti-floating agent, a stabilizer, a silane coupling agent, organic compound-based and inorganic compound-based lubricants, a light stabilizer, an antioxidant, a phosphorus-based processing heat stabilizer, and an antistatic agent, for example. The antioxidant and the light stabilizer are preferably added as appropriate, depending on subsequent applications of a composition. Other resins and elastomers, for example, may be added to the extent that they do not impair the scope of the present invention.

Examples of the antioxidant include, for example, Irganox (trade name) 1010, Irganox 1076, Irganox 1135, Irganox 245, Irganox 3114, and Irganox 3790, for example, manufactured by Ciba Specialty Chemicals Corporation, Adekastab (trade name) AO-60, Adekastab AO-70, and Adekastab AO-80, for example, manufactured by Asahi Denka Co., Ltd. When the antioxidant is added, it is preferably added in a range of 0.05 parts by mass or more and 1 part by mass or less, relative to 100 parts by mass of resin (X).

Examples of the phosphorus-based processing heat stabilizer include, for example, Irgafos (trade name) 38, Irgafos 126, and Irgafos P-EPQ, for example, manufactured by Ciba Specialty Chemicals Corporation, and Adekastab (trade name) PEP-4C, Adekastab 11C, Adekastab 24, and Adekastab 36, for example, manufactured by Asahi Denka Co., Ltd. When the phosphorus-based processing heat stabilizer is added, it is preferably added in a range of 0.05 parts by mass or more and 1 part by mass or less, relative to 100 parts by mass of resin (X).

Examples of the light stabilizer include ultraviolet absorbers or hindered amine-based light stabilizers, such as Tinuvin (trade name) P, Tinuvin 234, Tinuvin 326, Tinuvin 327, Tinuvin 328, Tinuvin 329, Tinuvin 213, Tinuvin 571, Tinuvin 1577, Tinuvin 622LD, Tinuvin 144, Tinuvin 765, Tinuvin 770, Tinuvin B75, and Tinuvin B88, for example, manufactured by Ciba Specialty Chemicals Corporation, and Sanol (trade name) LS-770, Sanol 765, Sanol 2626, and Sanol 944, for example, manufactured by Sankyo Corporation, or LA (trade name) -32, LA-36, LA-1413, LA-52, LA- 62, LA-77, LA-601, and LA-T-940, for example, manufactured by Asahi Denka Kougyou Co., Ltd. When the light stabilizer is added herein, the ultraviolet absorber and the hindered amine-based light stabilizer are preferably combined for use, and each thereof is preferably added in a range of 0.05 parts by mass or more and 3 parts by mass or less, relative to 100 parts by mass of resin (X).

Examples of the organic compound-based lubricant can include, for examples, a fatty acid amide, and commercially available products thereof include Nikka Amide (trade name), Bisamide (trade name), and SRIPAX (trade name), for example, manufactured by Nippon Kasei Chemical Company Limited, or Licowax (trade name) and Licolub (trade name), for example, manufactured by Clariant Corporation.

Examples of the inorganic compound-based lubricant include, for example, talc and silica, for example.

When the organic compound-based lubricant is added herein, it is preferably added in a range of 0.05 parts by mass or more and 2 parts by mass or less relative to 100 parts by mass of resin (X).

Examples of conventional known defoamers that are not applicable to the ethylene·α-olefin copolymer (Y) include an ethylene·α-olefin copolymer, a silicone-based defoamer, an acrylic-based defoamer, and a butadiene-based defoamer, for example.

### [Method for producing resin composition]

The resin composition of the present invention can be obtained by mixing the resin (X), the ethylene·α-olefin copolymer (Y), and optionally the additional constituent by known methods.

The resin composition of the present invention can also be produced by a method including a step of mixing a resin (X) (provided that the copolymer (Y') to be described below is excluded), and an ethylene·α-olefin copolymer (Y') produced by the following method (α) and satisfying the requirements (y-1) and (y-2) or the requirements (y-2) and (y-4), and optionally the additional constituent.

Method (α): A method including a step of solution polymerizing an α-olefin in the presence of a catalyst system containing the bridged metallocene compound (P) represented by the (formula 1), and the compound (Q).

In a case in which the resin (X) is a curable resin (X1), the resin (X) may be added to a composition including all components other than the resin (X) immediately prior to attempting to cure the resin composition of the present invention, or may be mixed with other components at a further prior stage.

As described above, in the present invention, the two-component curable urethane resin is also suitably employed as the curable resin (X1) due to facilitation of regulation of a curing rate as the curable resin (X1). Therefore, the curable resin (X1) may be formed in a process of preparing the resin composition of the present invention by mixing liquid A containing an organic polyisocyanate and liquid B containing an active hydrogen group-containing compound, for example.

In the case of the resin (X) being the curable resin (X1), the ethylene·α-olefin copolymer (Y) may be added to a composition including all components other than the ethylene·α-olefin copolymer (Y) immediately before attempting to cure the resin composition of the present invention, or may be mixed with other component at a further previous stage. Herein, for example, in a case in which a two-component curable urethane resin is used as the curable resin (X1), the ethylene·α-olefin copolymer (Y) is preferably mixed in the liquid B before mixing the liquid A and the liquid B.

In the case of the resin (X) being the curable resin (X1), the "additional constituents" described above such as the catalyst (curing agent), solvent, plasticizer, filler, coloring agent, and additive may be added to a resin composition immediately prior to attempting to cure the resin composition of the present invention, or may be mixed with other components in a further prior stage. Some components of the "additional constituents" may also be mixed with other components in a process of producing a resin composition, as well as the remaining component of the "additional constituents" may be then added to the resin composition immediately before attempting to cure the resin composition. However, in the case of using the two-component curable urethane resin as the curable resin (X1), the "additional constituent" is preferably mixed in the liquid B before mixing the liquid A and the liquid B.

Namely, in one particularly suitable aspect of the present invention, in the case of the resin (X) being the curable resin (X1), the resin composition of the present invention can be obtained by mixing liquid B including the active hydrogen group-containing compound and the "additional constituent" arbitrarily used, liquid A containing the organic polyisocyanate, and the ethylene·α-olefin copolymer (Y). In this case, through reaction of the liquid A with the liquid B by mixing them, a curable resin composition including the curable resin (X) and the ethylene·α-olefin copolymer (Y) will be formed.

In another aspect, the resin composition of the present invention can also be obtained by mixing the liquid B including the active hydrogen group-containing compound, the ethylene·α-olefin copolymer (Y), and the "other constituent" arbitrarily used, with the liquid A containing the organic polyisocyanate. In this case as well, through the reaction of the liquid A with the liquid B by mixing them, a resin composition including the curable resin (X1) and the ethylene·α-olefin copolymer (Y) will be formed in the same manner.

Curing of the resin composition of the present invention may be carried out under conditions of either an ordinary temperature or a thermal curing temperature.

Means of fabricating a cured product (forming means) is not questioned, and any known method can be employed. For example, a cured product having a desired shape can be obtained by coating or pouring the resin composition of the present invention and curing it as it is. In other words, the present invention also provides a molded body formed of the resin composition of the present invention.

The resin composition of the present invention has significantly favorable defoaming properties thereof, particularly foam suppressing properties. Therefore, when the resin (X) is the curable resin (X1), and the resin composition of the present invention undergoes forming of a cast product, bubbles and gas inside a curable resin composition or a curing reaction intermediate created from the curable resin composition, are degassed in the process of change from the composition to a cured product, resulting in a molded body having a smooth surface without impairing gloss and excellent mechanical properties being obtained. Moreover, when the resin composition is used as a coating agent, not only no foam remains inside the coating film, but also a coating film surface having smoothness without impairing gloss of the surface, and excellent finishability with excellent mechanical properties, is obtained. In other words, the present invention also provides a coating material including the resin composition of the present invention, and also provides a coating film formed of the resin composition.

The formed body formed of the resin composition of the present invention can be used as industrial goods as thermosetting formed bodies or coating materials as coating agents, industrial goods as ordinary-temperature-curable formed bodies, injection products, or coating materials as coating agents, coating-film waterproof materials, and coat materials, such as flooring materials. Namely, the present invention also provides waterproof materials formed of the resin composition of the present invention.

Furthermore, the present invention also provides an adhesive formed of the resin composition of the present invention.

### [Examples]

The present invention will be described in more detail by way of Examples, but the present invention is not limited to these Examples.

### [Measurement and evaluation methods]

In Examples, for example, measurements of physical properties and evaluations thereof were conducted as follows.

### [Solubility parameter]

The solubility parameter can be calculated based on a D. W. Van Krevelen's estimation method, and specifically, the solubility parameter ((MPa)^{1/2}) was obtained based on a cohesive energy and molar molecular volume.

### [Weight-average molecular weight (Mw)]

The weight-average molecular weight (Mw) was determined using the following high-speed GPC measurement apparatus and measurement conditions.
High-performance GPC measurement apparatus: HLC8320GPC manufactured by Tosoh Corporation
Mobile phase: THF (manufactured by Wako Pure Chemical Industries, Ltd., stabilizer-free, liquid chromatography grade)
Column: Two TSKgel Super MultiporeHZ-M columns manufactured by Tosoh Corporation, connected in series.
Sample concentration: 5 mg/mL
Mobile phase flow rate: 0.35 mL/min
Measurement temperature: 40°C
Standard sample for calibration curve: PStQuick MP-M manufactured by Tosoh Corporation

### [100°C kinematic viscosity]

The kinematic viscosity at 100°C was measured using a fully automatic viscometer CAV-4 manufactured by Canon Inc., in accordance with ASTM D445.

### [Ethylene content]

The ethylene content was measured by using an ECP500 nuclear magnetic resonance apparatus manufactured by JEOL Ltd., where measurements were carried out under the conditions: Solvent: mixed solvent of orthodichlorobenzene/deuterated benzene (80/20% by volume), sample concentration: 55 mg/0.6 mL, measurement temperature: 120°C, observation nucleus: ¹³C (125 MHz), sequence: single-pulse proton decoupling, pulse width: 4.7 psec (45° pulse), repetition time: 5.5 sec, number of accumulations: 10,000 times or more, and chemical shift reference value: 27.50 ppm. The ethylene content was determined from the obtained ¹³C-NMR spectra, based on "Polymer Analysis Handbook" (Asakura Publishing Co., Ltd., P163-170), and reports of G. J. Ray (Macromolecules, 10, 773 (1977)), J. C. Randall (Macromolecules, 15, 353 (1982)), and K. Kimura (Polymer, 25, 4418 (1984)), for example.

### [Melting point]

The melting point was measured by using an X-DSC-7000 manufactured by Seiko Instruments Inc. A measurement sample of approximately 8 mg was placed in a simple airtight aluminum sample pan in a DSC cell, and the DSC cell was heated at a rate of 10°C/min from room temperature to 150°C under a nitrogen atmosphere, then held at 150°C for 5 minutes, and then cooled at a rate of 10°C/min to cool the DSC cell to -100°C (cooling process). Subsequently, the DSC cell was held at -100°C for 5 minutes and then raised to 150°C at a rate of 10°C/min, and a temperature at which the enthalpy curve obtained in the course of temperature rise exhibits the maximum value, was determined as a melting point (Tm), and a sum of endothermic energy amount accompanying melting was determined as a melting enthalpy (ΔH). In a case in which no peak was observed or a value of melting enthalpy (ΔH) was 1 J/g or less, the melting point (Tm) was deemed not to be observed. The melting point (Tm) and melting enthalpy (ΔH) were determined in accordance with JIS K7121.

### [Foam inhibition evaluation]

A tin plate of 300 mm × 300 mm in dimension was coated with each of the curable resin compositions obtained in Examples, for example, using a roller with medium hair, and an appearance of coating film after 30 seconds was visually observed to evaluate foam suppressing properties based on the number of bubbles remaining on the surface. Meanings of the symbols in the table are as described below.

O: Bubbles were slightly observed.

X: Bubbles were observed on the entire surface.

### [Foam burst evaluation]

The coating film obtained in the above foam inhibition evaluation was allowed to stand and cured at room temperature overnight. Evaluation was made on foam breaking properties by visual observation based on the number of bubbles remaining on the surface of the coating film after the curing. The meanings of the symbols in the table are as described below.

O: Compared to the number of bubbles after 30 seconds of coating, bubbles have disappeared at a proportion of 90% or more.

Δ: Compared to the number of bubbles after 30 seconds of coating, bubbles have disappeared at a proportion of 50% or more and less than 90%.

X: Compared to the number of bubbles after 30 seconds of coating, bubbles have disappeared at a proportion of less than 50%.

### [Production Example 1-1] (ethylene·α-olefin copolymer (Y-1))

A glass polymerization vessel with an inner volume of 1 L that had been sufficiently substituted with nitrogen, was fed with 250 mL of decane, a temperature inside the system was raised to 130°C, the vessel was then continuously fed with ethylene at a flow rate of 15 L/hr, propylene at a flow rate of 85 L/hr and hydrogen at a flow rate 360 L/hr, and the mixture was stirred at 600 rpm. Next, the polymerization vessel was fed with 0.2 mmol of triisobutylaluminum, and subsequently fed with mixed liquid obtained by preliminarily having mixed 1.147 mmol of modified methylaluminoxane (MMAO-3A manufactured by Tosoh Finechem Corporation, hereinafter referred to as "MMAO") in terms of aluminum atoms, 0.0038 mol of [methylphenylmethylene(η⁵-cyclopentadienyl)(η⁵-2,7-di-t-butylfluorenyl)]zirconium dichloride, and toluene for 15 minutes or longer, to then initiate polymerization. Thereafter, continuous supply of ethylene, propylene, and hydrogen was continued, and the polymerization was performed at 130°C for 15 minutes. After completing the polymerization by adding a small amount of isobutyl alcohol into the system, unreacted monomer was purged. The obtained polymer solution was washed with 100 mL of 0.2 mol/l hydrochloric acid three times and then with 100 mL of distilled water three times, dried over magnesium sulfate, and then the solvent was distilled off under reduced pressure. The resulting polymer was dried overnight under reduced pressure at 80°C to obtain an ethylene·α-olefin copolymer (Y-1).

### [Production Example 1-2] (ethylene·α-olefin copolymer (Y-2))

A glass polymerization vessel with an inner volume of 1 L that had been sufficiently substituted with nitrogen, was fed with 250 mL of decane, a temperature inside the system was raised to 130°C, the vessel was then continuously fed with ethylene at a flow rate of 7 L/hr, propylene at a flow rate of 93 L/hr and hydrogen at a flow rate 20 L/hr, and the mixture was stirred at 600 rpm. Next, the polymerization vessel was fed with 0.2 mmol of triisobutylaluminum, and subsequently fed with mixed liquid obtained by preliminarily having mixed 0.192 mmol of MMAO in terms of aluminum atoms, 0.0006 mmol of [methylphenylmethylene(η⁵-cyclopentadienyl)(η⁵-2,7-di-t-butylfluorenyl)]zirconium dichloride, and toluene for 15 minutes or longer, to then initiate polymerization. Thereafter, continuous supply of ethylene, propylene, and hydrogen was continued, and the polymerization was performed at 130°C for 15 minutes. After completing the polymerization by adding a small amount of isobutyl alcohol into the system, unreacted monomer was purged. The obtained polymer solution was washed with 100 mL of 0.2 mol/l hydrochloric acid three times and then with 100 mL of distilled water three times, dried over magnesium sulfate, and then the solvent was distilled off under reduced pressure. The resulting polymer was dried overnight under reduced pressure at 80°C to obtain an ethylene·α-olefin copolymer (Y-2).

### [Production Example 1-3] (ethylene·α-olefin copolymer (Y-3))

A glass polymerization vessel with an inner volume of 1 L that had been sufficiently replaced with nitrogen, was fed with 250 mL of decane, a temperature inside the system was raised to 130°C, the vessel was then continuously fed with ethylene at a flow rate of 15 L/hr, propylene at a flow rate of 85 L/hr and hydrogen at a flow rate 360 L/hr, and the mixture was stirred at 600 rpm. Next, the polymerization vessel was fed with 0.2 mmol of triisobutylaluminum, and subsequently fed with mixed liquid obtained by preliminarily having mixed 1.147 mmol of MMAO in terms of aluminum atoms, 0.0038 mmol of [diphenylmethylene(η⁵-3-n-butylcyclopentadienyl)(η⁵-2,7-di-tert-butylfluorenyl)]zirconium dichloride, and toluene for 15 minutes or longer, to then initiate polymerization. Thereafter, continuous supply of ethylene, propylene, and hydrogen was continued, and the polymerization was performed at 130°C for 15 minutes. After completing the polymerization by adding a small amount of isobutyl alcohol into the system, unreacted monomer was purged. The obtained polymer solution was washed with 100 mL of 0.2 mol/l hydrochloric acid three times and then with 100 mL of distilled water three times, dried over magnesium sulfate, and then the solvent was distilled off under reduced pressure. The resulting polymer was dried overnight under reduced pressure at 80°C to obtain an ethylene·α-olefin copolymer (Y-3).

### [Production Example 2-1] (ethylene·α-olefin copolymer (Y-4))

A glass polymerization vessel with an inner volume of 1 L that had been sufficiently replaced with nitrogen, was fed with 250 mL of decane, a temperature inside the system was raised to 130°C, the vessel was then continuously fed with ethylene at a flow rate of 25 L/hr, propylene at a flow rate of 75 L/hr and hydrogen at a flow rate 360 L/hr, and the mixture was then stirred at 600 rpm. Next, the polymerization vessel was fed with 0.2 mmol of triisobutylaluminum, and subsequently fed with mixed liquid obtained by preliminarily having mixed 0.688 mmol of MMAO in terms of aluminum atoms, 0.0023 mmol of [methylphenylmethylene(η⁵-cyclopentadienyl)(η⁵-2,7-di-t-butylfluorenyl)]zirconium dichloride, and toluene for 15 minutes or longer, to then initiate polymerization. Thereafter, continuous supply of ethylene, propylene, and hydrogen was continued, and the polymerization was performed at 130°C for 15 minutes. After completing the polymerization by adding a small amount of isobutyl alcohol into the system, unreacted monomer was purged. The obtained polymer solution was washed with 100 mL of 0.2 mol/l hydrochloric acid three times and then with 100 mL of distilled water three times, dried over magnesium sulfate, and then the solvent was distilled off under reduced pressure. The resulting polymer was dried overnight under reduced pressure at 80°C to obtain an ethylene·α-olefin copolymer (Y-4).

### [Production Example 2-2] (ethylene·α-olefin copolymer (Y-5))

A glass polymerization vessel with an inner volume of 1 L that had been sufficiently replaced with nitrogen, was fed with 250 mL of decane, a temperature inside the system was raised to 130°C, the vessel was then continuously fed with ethylene at a flow rate of 25 L/hr, propylene at a flow rate of 75 L/hr and hydrogen at a flow rate 20 L/hr, and the mixture was then stirred at 600 rpm. Next, the polymerization vessel was fed with 0.2 mmol of triisobutylaluminum, and subsequently fed with mixed liquid obtained by preliminarily having mixed 0.115 mmol of MMAO in terms of aluminum atoms, 0.0004 mmol of [methylphenylmethylene(η⁵-cyclopentadienyl)(η⁵-2,7-di-t-butylfluorenyl)]zirconium dichloride, and toluene for 15 minutes or longer, to then initiate polymerization. Thereafter, continuous supply of ethylene, propylene, and hydrogen was continued, and the polymerization was performed at 130°C for 15 minutes. After completing the polymerization by adding a small amount of isobutyl alcohol into the system, unreacted monomer was purged. The obtained polymer solution was washed with 100 mL of 0.2 mol/l hydrochloric acid three times and then with 100 mL of distilled water three times, dried over magnesium sulfate, and then the solvent was distilled off under reduced pressure. The resulting polymer was dried overnight under reduced pressure at 80°C to obtain an ethylene·α-olefin copolymer (Y-5).

### [Other polymers]

(Z-1): Paraffinic process oil (Diana Process Oil PW-380 manufactured by Idemitsu Kosan Co., Ltd.)
(Z-2): Dimethyl silicone oil (KF-96-50cs manufactured by Shin-Etsu Chemical Co., Ltd.)
Physical properties of each polymer are shown in Table 1.

### [Table 1]

**Table 1**

| | Solubility parameter | Weight-average molecular weight | 100°C kinematic viscosity | Ethylene content | Melting point |
|---|---|---|---|---|---|
| | MPa^{1/2} | - | mm2/s | mol% | °C |
| Ethylene·α-olefin copolymer (Y-1) | 16.3 | 2,400 | 40 | 34 | Not observed |
| Ethylene·α-olefin copolymer (Y-2) | 16.1 | 7,400 | 350 | 15 | Not observed |
| Ethylene·α-olefin copolymer (Y-3) | 16.3 | 2,500 | 40 | 35 | Not observed |
| Ethylene·α-olefin copolymer (Y-4) | 16.4 | 2,700 | 40 | 48 | Not observed |
| Ethylene·α-olefin copolymer (Y-5) | 16.4 | 8,700 | 620 | 52 | Not observed |
| Paraffinic process oil (Z-1) | 16.8 | 1,300 | 30 | - | Not observed |
| Dimethyl silicone oil (Z-2) | 15.3 | 7,500 | 16 | - | Not observed |

### [Example 1]

### (Liquid A)

As the liquid A, an isocyanate-containing prepolymer (Hyprene P-306A; viscosity 6,000 cps/25°C, manufactured by Mitsui Chemicals, Inc.), was used. Herein, the NCO group content in this isocyanate-containing prepolymer was 0.69 milli equivalent (2.9% by weight).

### (Liquid B)

A round can was fed with 105 g of a polyether polyol (MC-506; viscosity 1,400 cps/25°C, containing a polyamine, manufactured by Mitsui Chemicals, Inc.), 124 g of DINP (manufactured by J-Plus Co., Ltd.) as a softener, and 4.3 g of bismuth octylate (NEOSTANN U-600 manufactured by Nittoh Chemical Co., Ltd.) as a catalyst, and then gradually charged with 345 g of calcium carbonate (NS-200 manufactured by Nitto Funka Kogyo K. K.) under stirring with a turbine blade agitator, and the mixture was stirred at 600 rpm for 20 minutes to prepare a curing agent to be liquid B.

Herein, the above MC-506 used as the polyether polyol is specifically a liquid amine composed of 24% by weight of 3,3'-dichloro-4,4'-diaminodiphenylmethane and 24% by weight of an aromatic polyamine obtained by condensation of aniline and 2-chloroaniline with formaldehyde in the presence of a mineral acid, and 52% by weight of a polyether polyol, with the active hydrogen content of 3.7 milli equivalent.

### (Preparation of curable resin composition)

To 24.2 g of the liquid B prepared as described above, was added 0.129 g of the ethylene·α-olefin copolymer (Y-1) as a defoamer, and the mixture was stirred at 600 rpm for 1 minute. To the mixture thus obtained was added 25.8 g of the above liquid A, and the mixture was stirred at 600 rpm for 3 minutes to obtain a curable resin composition.

A ratio of the number of active hydrogen groups in the active hydrogen group-containing compound to one isocyanate group of the isocyanate-containing prepolymer in this curable resin composition was 0.9 (≈ (3.7 × 8.8)/(0.69 × 51.5)), as calculated from the weight ratio.

### [Example 2]

A curable resin composition was obtained in the same manner as in Example 1, except that the defoamer was replaced with ethylene·α-olefin copolymer (Y-2).

### [Example 3]

A curable resin composition was obtained in the same manner as in Example 1, except that the defoamer was replaced with ethylene·α-olefin copolymer (Y-3).

### [Comparative Example 1]

A curable resin composition was obtained in the same manner as in Example 1, except that the defoamer was replaced with ethylene·α-olefin copolymer (Y-4).

### [Comparative Example 2]

A curable resin composition was obtained in the same manner as in Example 1, except that the defoamer was replaced with ethylene·α-olefin copolymer (Y-5).

### [Comparative Example 3]

A curable resin composition was obtained in the same manner as in Example 1, except that the defoamer was replaced with the paraffinic process oil (Z-1).

### [Comparative Example 4]

A curable resin composition was obtained in the same manner as in Example 1, except that the defoamer was replaced with the dimethyl silicone oil (Z-2).

The amounts of each constituent in Examples and Comparative Examples are shown in Table 2.

| | |
|---|---|
| | [Table 2] |

**Table 2**

| Constituent | | Compounded amount upon preparation of curable resin composition | Compounded amount upon preparation of liquid B | Content in curable resin composition | |
|---|---|---|---|---|---|
| | | (g) | (g) | (% by mass) | (parts by mass) |
| Liquid A | Isocyanate-containing prepolymer | 25.8 | - | 51.5 | 100 |
| Liquid B | Polyether polyol (containing polyamine) | 4.4 | 105 | 8.8 | |
| | Softener | 5.2 | 124 | 10.4 | 17.2 |
| | Catalyst | 0.2 | 4.3 | 0.4 | 0.6 |
| | Calcium carbonate | 14.4 | 345 | 28.8 | 47.8 |
| Defoamer | Ethylene·α-olefin copolymers (Y-1 to Y-5)) | 0.129 | - | 0.257 | 0.427 |
| | Paraffinic process oil (Z-1) | | | | |
| | Dimethyl silicone oil (Z-2) | | | | |
| Total amount | | 50.1 | - | 100 | - |

The evaluation results of the curable resin compositions obtained in Examples and Comparative Examples are shown in Table 3.

### [Table 3]

**Table 3**

| | Defoamer | Foam suppression evaluation | Foam breaking evaluation |
|---|---|---|---|
| Example 1 | Ethylene·α-olefin copolymer (Y-1) | ○ | ○ |
| Example 2 | Ethylene·α-olefin copolymer (Y-2) | ○ | ○ |
| Example 3 | Ethylene·α-olefin copolymer (Y-3) | ○ | ○ |
| Comparative Example 1 | Ethylene·α-olefin copolymer (Y-4) | × | ○ |
| Comparative Example 2 | Ethylene·α-olefin copolymer (Y-5) | × | ○ |
| Comparative Example 3 | Paraffinic process oil (Z-1) | × | × |
| Comparative Example 4 | Dimethyl silicone oil (Z-2) | ○ | Δ |

## Claims

1. A resin composition comprising: a resin (X) excluding the copolymer (Y) described below; and an ethylene·α-olefin copolymer (Y) satisfying the following requirements (y-1) and (y-2) :
(y-1) A solubility parameter calculated based on a D. W. Van Krevelen's estimation method is 15.5 to 16.3 (MPa)^{1/2}; and
(y-2) A weight-average molecular weight (Mw) obtained by gel permeation chromatography (GPC) is 1,500 to 30,000.

2. The resin composition according to claim 1, wherein the ethylene·α-olefin copolymer (Y) satisfies the following requirement (y-4):
(y-4) An ethylene content is 1 to 40 mol%.

3. A resin composition comprising: a resin (X) excluding the copolymer (Y) described below; and an ethylene·α-olefin copolymer (Y) satisfying the following requirements (y-2) and (y-4) :
(y-2) A weight-average molecular weight (Mw) obtained by gel permeation chromatography (GPC) is 1,500 to 30,000; and
(y-4) An ethylene content is 1 to 40 mol%.

4. The resin composition according to claim 1 or 3, wherein the resin (X) is a curable resin (X1).

5. The resin composition according to claim 4, wherein the curable resin (X1) is one or more resins selected from the group consisting of an epoxy resin, a urethane resin, an unsaturated polyester, a phenol resin, a melamine resin, and a silicone resin.

6. The resin composition according to claim 5, wherein the curable resin (X1) is one or more resins selected from the group consisting of a urethane resin and an epoxy resin.

7. The resin composition according to claim 1 or 3, wherein the ethylene·α-olefin copolymer (Y) satisfies the following requirements (y-3) and (y-5):
(y-3) A kinematic viscosity at 100°C is 10 to 5,000 mm²/s; and
(y-5) No melting point is observed in a temperature range of -100°C to 150°C in differential scanning calorimetry (DSC).

8. The resin composition according to claim 1 or 3, wherein the ethylene·α-olefin copolymer (Y) is an ethylene-propylene copolymer.

9. The resin composition according to claim 1 or 3, wherein a content of the ethylene·α-olefin copolymer (Y) is 0.001 to 20 parts by mass per 100 parts by mass of the resin (X).

10. The resin composition according to claim 1 or 3, wherein the ethylene·α-olefin copolymer (Y) is a defoamer.

11. A molded body formed of the resin composition according to claim 1 or 3.

12. A coating material comprising the resin composition according to claim 1 or 3.

13. A waterproof material formed of the resin composition according to claim 1 or 3.

14. A coating film formed of the resin composition according to claim 1 or 3.

15. An adhesive formed of the resin composition according to claim 1 or 3.

16. A method for producing a resin composition, comprising a step of mixing a resin (X) excluding the copolymer (Y') described below and an ethylene·α-olefin copolymer (Y') produced by a method (α) below and satisfying the following requirements (y-1) and (y-2) or the following requirements (y-2) and (y-4):
(y-1) A solubility parameter calculated based on a D. W. Van Krevelen's estimation method is 15.5 to 16.3 (MPa)^{1/2};
(y-2) A weight-average molecular weight (Mw) obtained by gel permeation chromatography (GPC) is 1,500 to 30,000; and
(y-4) An ethylene content is 1 to 40 mol%;
Method (α): A method including a step of solution polymerizing ethylene and an α-olefin in the presence of a catalyst system containing a bridged metallocene compound (P) represented by the following (formula 1), and at least one compound (Q) selected from the group consisting of an organometallic compound (Q-1), an organoaluminumoxy compound (Q-2), and a compound (Q-3) that reacts with the bridged metallocene compound (P) to form an ion pair; 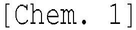 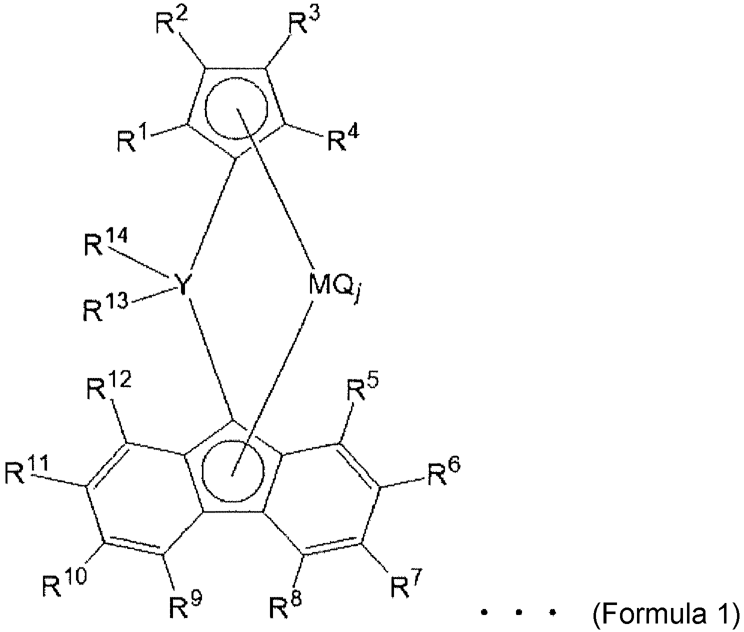 wherein R¹, R², R³, R⁴, R⁵, R⁸, R⁹ and R¹² are each independently a hydrogen atom, a hydrocarbon group or a silicon-containing hydrocarbon group, and a plurality of adjacent groups are optionally linked to each other to form a ring structure;
R⁶ and R¹¹ are the same group and are a hydrogen atom, a hydrocarbon group, or a silicon-containing hydrocarbon group;
R⁷ and R¹⁰ are the same group and are a hydrogen atom, a hydrocarbon group, or a silicon-containing hydrocarbon group;
R⁶ and R⁷ are optionally bonded to a hydrocarbon having 2 to 3 carbon atoms to form a ring structure;
R¹⁰ and R¹¹ are optionally bonded to a hydrocarbon having 2 to 3 carbon atoms to form a ring structure, and R⁶, R⁷, R¹⁰ and R¹¹ are not simultaneously hydrogen atoms;
Y is a carbon atom or a silicon atom;
R¹³ and R¹⁴ are each independently a hydrogen atom, a hydrocarbon group or a silicon-containing hydrocarbon group, and are optionally linked to each other to form a ring structure;
M is Ti, Zr or Hf;
Q is independently a halogen atom, a hydrocarbon group, an anionic ligand or a neutral ligand capable of coordinating to a lone electron pair; and
j is an integer of 1 to 4.

17. The production method according to claim 16, wherein either or both of substituents R¹³ and R¹⁴ of the bridged metallocene compound (P) represented by (formula 1) are aryl groups.

18. The production method according to claim 17, wherein both substituents R¹³ and R¹⁴ of the bridged metallocene compound (P) represented by (formula I) are aryl groups, and either of substituents R² and R³ is a saturated hydrocarbon group having 4 carbon atoms.
